# EUROPEAN PATENT APPLICATION

(11) **EP 4 311 341 A1**
(43) Date of publication of application: **24.01.2024**
(21) Application number: 22787425.2
(22) Date of filing: 07.04.2022
(51) Int. Cl.: H04W 72/04, H04L 5/00

(54) **COMMUNICATION METHOD AND COMMUNICATION DEVICE**

(30) Priority: 16.04.2021 CN 202110414165
(71) Applicant: Huawei Technologies Co., Ltd., Shenzhen, Guangdong 518129 (CN)
(72) Inventor: WU, Ye, Shenzhen, Guangdong 518129 (CN); JI, Liuliu, Shenzhen, Guangdong 518129 (CN); JIN, Huangping, Shenzhen, Guangdong 518129 (CN)
(74) Representative: Huawei European IPR
(86) International application number: PCT/CN2022/085478
(87) International publication number: WO 2022/218198

(57) **Abstract**

Embodiments of this application provide a communication method and a communication apparatus, to support flexible configuration of QCL information of different reference signal ports, improve a success rate of performing channel estimation or channel measurement on a transport layer by the reference signal port, and improve communication efficiency. In the method, a transmit end determines first indication information, where the first indication information is used to configure a first reference signal port, and the configuration indicates first quasi co-location QCL information of the first reference signal port; and then the transmit end sends the first indication information to a receive end.

## Description

This application claims priority to Chinese Patent Application No. 202110414165.3, filed with the China National Intellectual Property Administration on April 16, 2021 and entitled "COMMUNICATION METHOD AND COMMUNICATION APPARATUS", which is incorporated herein by reference in its entirety.

### TECHNICAL FIELD

This application relates to the field of wireless communication, and in particular, to a communication method and a communication apparatus.

### BACKGROUND

In a communication system, that antenna ports are quasi co-located (quasi co-located, QCL) is a state assumption between the antenna ports. If one antenna port of a transmit end is QCL with another antenna port, it means that a receive end may assume that a large-scale feature (or referred to as a radio channel feature) of a signal received from one antenna port (or a radio channel corresponding to the antenna port) is completely or partially the same as a large-scale feature of a signal received from another antenna port (or a radio channel corresponding to the antenna port). The large-scale feature of the signal may include a Doppler shift, a Doppler spread, an average delay, a delay spread, and the like.

Currently, the QCL may be applied to a plurality of types of signals, for example, a demodulation reference signal (demodulation reference signal, DMRS) and a channel state information reference signal (channel state information reference signal, CSI-RS), transmitted through an antenna port.

The DMRS is used as an example, the transmit end may perform a unified QCL assumption on a plurality of different DMRS ports (DMRS ports) included in a DMRS code division multiplexing (code division multiplexing, CDM) group. Generally, one DMRS port corresponds to one transport layer and is used to perform channel estimation on the transport layer. The receive end may perform, based on the unified QCL assumption, channel estimation on a plurality of transport layers corresponding to the plurality of DMRS ports in the DMRS CDM group, to implement data demodulation.

However, when the receive end device and the transmit end device are in a scenario in which a channel has a spatial non-stationary feature or a multi-transmission and reception point (transmission and reception point, TRP) transmission scenario, QCL assumptions of DMRSs corresponding to different transport layers in a same DMRS CDM group may be different. However, a manner in which the receive end performs channel estimation based on the QCL assumption of the DMRS CDM group easily causes inaccurate DMRS channel estimation, and further affects effect of data demodulation.

### SUMMARY

Embodiments of this application provide a communication method and a communication apparatus, to support flexible configuration of QCL information of different reference signal ports, improve a success rate of performing channel estimation or channel measurement on a transport layer by the reference signal port, and improve communication efficiency.

A first aspect of an embodiment of this application provides a communication method. The communication method may be performed by a communication apparatus. The communication apparatus may be a transmit end (which includes a network device or a terminal device), or may be a component (for example, a processor, a chip, or a chip system) of a transmit end. In the method, the transmit end determines first indication information, where the first indication information is used to configure a first reference signal port, and the configuration indicates first quasi co-location QCL information of the first reference signal port; and then the transmit end sends the first indication information to a receive end.

Based on the foregoing technical solution, the transmit end sends, to the receive end, the first indication information used to perform QCL configuration on the first reference signal port. The QCL configuration is performed by using a reference signal port as a granularity, so that the receive end may perform channel estimation or channel demodulation on a transport layer corresponding to the first reference signal port based on the first QCL information. Compared with a conventional manner in which a DMRS CDM group is used as a configuration granularity of QCL information, setting a configuration granularity of QCL information based on a reference signal port is equivalent to configuring a QCL relationship based on a transport layer, so that QCL information of different reference signal ports can be flexibly configured, to improve a success rate of performing channel estimation or channel measurement on the transport layer by the reference signal port, and improve communication efficiency.

In a possible implementation of the first aspect of this embodiment of this application, the first indication information is further used to configure a second reference signal port, and the configuration further indicates second QCL information of the second reference signal port.

Based on the foregoing technical solution, the first indication information may be further used to perform QCL configuration on other reference signal ports than the first reference signal port, for example, perform QCL configuration on the second reference signal port.

It should be noted that the first reference signal port and the second reference signal port are different reference signal ports, and the first reference signal port and the second reference signal port may belong to a same DMRS CDM group, or may belong to different DMRS CDM groups. This is not limited herein.

In a possible implementation of the first aspect of this embodiment of this application, the first QCL information is different from the second QCL information.

Based on the foregoing technical solution, the first QCL information indicating a radio channel feature corresponding to the first reference signal port may be different from the second QCL information indicating a radio channel feature corresponding to the second reference signal port, so that the receive end may subsequently separately perform channel estimation or channel demodulation on transport layers corresponding to different reference signal ports by using different QCL information.

Optionally, the first QCL information is the same as the second QCL information.

In a possible implementation of the first aspect of this embodiment of this application, the first QCL information includes first-type QCL information.

Based on the foregoing technical solution, the first QCL information of the first reference signal port may indicate, by using a plurality of types (types), a plurality of radio channel features corresponding to the first reference signal port. The first indication information used to configure the first reference signal port may be specifically used to configure at least one-type QCL information in the first QCL information, for example, the first-type QCL information.

Optionally, the first QCL information may further include another-type QCL information, for example, second-type QCL information, third-type QCL information, or another-type QCL information.

In a possible implementation of the first aspect of this embodiment of this application, the second QCL information includes first-type QCL information.

Based on the foregoing technical solution, the second QCL information of the second reference signal port may indicate, by using a plurality of types, a plurality of radio channel features corresponding to the second reference signal port. The first indication information used to configure the second reference signal port may be specifically used to configure at least one-type QCL information in the second QCL information, for example, the first-type QCL information.

Optionally, the second QCL information may further include another-type QCL information, for example, second-type QCL information, third-type QCL information, or another-type QCL information.

In a possible implementation of the first aspect of this embodiment of this application, the first-type QCL information in the first QCL information is different from the first-type QCL information in the second QCL information.

Based on the foregoing technical solution, the first-type QCL information in the first QCL information indicating the radio channel feature corresponding to the first reference signal port may be different from the second-type QCL information in the second QCL information indicating the same radio channel feature corresponding to the second reference signal port, so that the receive end may subsequently separately perform channel estimation or channel demodulation on transport layers corresponding to different reference signal ports by using different first-type QCL information.

Optionally, the first-type QCL information in the first QCL information is the same as the first-type QCL information in the second QCL information.

In a possible implementation of the first aspect of this embodiment of this application, the first QCL information is determined by using QCL information of at least one first signal, and the first signal includes at least one of the following:
a CSI-RS, a synchronization signal block (synchronization signal/physical broadcast channel block, SS/PBCH block or SSB), and a DMRS.

Based on the foregoing technical solution, the configuration of the first indication information may indicate that the first QCL information may be derived from QCL information of another signal, that is, the first QCL information may be determined by using the QCL information of the at least one first signal, and the first signal may be at least one of the CSI-RS, the SSB, or the DMRS, so that the first QCL information may be flexibly configured in a plurality of implementations.

In a possible implementation of the first aspect of this embodiment of this application, the first-type QCL information in the first QCL information is determined by using QCL information of at least one second signal, and the second signal includes at least one of the following:
the CSI-RS, the SSB, and the DMRS.

Based on the foregoing technical solution, the configuration of the first indication information may indicate that QCL information of a type in the first QCL information, for example, the first-type QCL information in the first QCL information, may be derived from QCL information of another signal, that is, the first-type QCL information in the first QCL information may be determined by using the QCL information of the at least one second signal, and the second signal may be at least one of the CSI-RS, the SSB, or the DMRS, so that the second QCL information may be flexibly configured in a plurality of implementations.

In a possible implementation of the first aspect of this embodiment of this application, the method further includes: The transmit end determines second indication information, where the second indication information indicates a frequency domain resource corresponding to the first QCL information; and then the transmit end sends the second indication information to the receive end.

Optionally, the second indication information is preconfigured on the receive end.

Optionally, the second indication information and the first indication information are carried in a same message (for example, a DCI message), or the second indication information and the first indication information are carried in different messages.

Based on the foregoing technical solution, the transmit end may further send, to the receive end, the second indication information indicating the frequency domain resource corresponding to the first QCL information, that is, the transmit end may configure the corresponding frequency domain resource for the first QCL information of the first reference signal port, so that the receive end may subsequently determine, based on the second indication information, to perform channel estimation or channel measurement on the first reference signal port on the specified frequency domain resource by using the first QCL information.

In a possible implementation of the first aspect of this embodiment of this application, the method further includes: The transmit end determines third indication information, where the third indication information indicates a frequency domain resource corresponding to the first-type QCL information in the first QCL information; and then the transmit end sends the third indication information to the receive end.

Based on the foregoing technical solution, the transmit end may further send, to the receive end, the third indication information indicating the frequency domain resource corresponding to the first-type QCL information in the first QCL information, that is, the transmit end may configure the corresponding frequency domain resource for the first-type QCL information in the first QCL information of the first reference signal port, so that the receive end may subsequently perform channel estimation or channel measurement on the first reference signal port on the specified frequency domain resource based on the third indication information by using the first-type QCL information in the first QCL information.

Optionally, the third indication information is preconfigured on the receive end.

Optionally, the third indication information and the first indication information are carried in a same message (for example, a DCI message), or the third indication information and the first indication information are carried in different messages.

In a possible implementation of the first aspect of this embodiment of this application, the first reference signal port is included in a first reference signal port group, the first reference signal port group includes one or more reference signal ports, and QCL information of the one or more reference signal ports is associated with the first reference signal port group.

Based on the foregoing technical solution, same QCL information may be configured for one or more reference signal ports in a same reference signal port group, or one or more reference signal ports having same QCL information are considered as a same reference signal port group. The QCL information of the one or more reference signal ports in the first reference signal port group is associated with the first reference signal port group, for example, associated with a group identifier, a group location, a group number, or another information of the first reference signal port group.

In a possible implementation of the first aspect of this embodiment of this application, the first reference signal port is included in the first reference signal port group, the first reference signal port group includes the one or more reference signal ports, and QCL information of a same type of the one or more reference signal ports is associated with the first reference signal port group.

Based on the foregoing technical solution, same QCL information of a type may be configured for one or more reference signal ports in a same reference signal port group, or one or more reference signal ports having same QCL information of a type are considered as a same reference signal port group. The QCL information of the same type of the one or more reference signal ports in the first reference signal port group is associated with the first reference signal port group, for example, associated with a group identifier, a group location, a group number, or another information of the first reference signal port group.

In a possible implementation of the first aspect of this embodiment of this application, the method further includes: The transmit end determines fourth indication information, where the fourth indication information indicates a frequency domain resource corresponding to the QCL information of the first reference signal port group; and then the transmit end sends the fourth indication information to the receive end.

Optionally, the fourth indication information is preconfigured on the receive end.

Optionally, the fourth indication information and the first indication information are carried in a same message (for example, a DCI message), or the fourth indication information and the first indication information are carried in different messages.

Based on the foregoing technical solution, the transmit end may further send, to the receive end, the fourth indication information indicating the frequency domain resource corresponding to the QCL information of the first reference signal port group, that is, the transmit end may configure the frequency domain resource for the QCL information of the first reference signal port group, so that the receive end may subsequently perform channel estimation or channel measurement on the first reference signal port group on the specified frequency domain resource based on the fourth indication information by using the QCL information of the first reference signal port group.

In a possible implementation of the first aspect of this embodiment of this application, the method further includes: The transmit end determines fifth indication information, where the fifth indication information indicates a frequency domain resource corresponding to first-type QCL information in the QCL information of the first reference signal port group; and then the transmit end sends the fourth indication information to the receive end.

Optionally, the fifth indication information is preconfigured on the receive end.

Optionally, the fifth indication information and the first indication information are carried in a same message (for example, a DCI message), or the fifth indication information and the first indication information are carried in different messages.

Based on the foregoing technical solution, the transmit end may further send, to the receive end, the fifth indication information indicating the frequency domain resource corresponding to the first-type QCL information in the QCL information of the first reference signal port group, that is, the transmit end may configure the corresponding frequency domain resource based on QCL information of a type of the first reference signal port group, so that the receive end may subsequently perform channel estimation or channel measurement on the first reference signal port group on the specified frequency domain resource based on the fifth indication information by using the first-type QCL information in the QCL information of the first reference signal port group.

In a possible implementation of the first aspect of this embodiment of this application, the first reference signal port is a DMRS port or a CSI-RS port.

Based on the foregoing technical solution, the first reference signal port may be the DMRS port or the CSI-RS port, so that the solution is applicable to configuration of different reference signal ports.

A second aspect of an embodiment of this application provides a communication method. The communication method may be performed by a communication apparatus. The communication apparatus may be a receive end (which includes a network device or a terminal device), or may be a component (for example, a processor, a chip, or a chip system) of a receive end. In the method, the receive end receives first indication information from a transmit end, where the first indication information is used to configure a first reference signal port, and the configuration indicates first quasi co-location QCL information of the first reference signal port; and then the receive end determines the first QCL information based on the first indication information.

Based on the foregoing technical solution, the receive end receives, from the transmit end, the first indication information used to perform QCL configuration on the first reference signal port. The QCL configuration is performed by using a reference signal port as a granularity, so that the receive end may perform channel estimation or channel demodulation on a transport layer corresponding to the first reference signal port based on the first QCL information. Compared with a conventional manner in which a DMRS CDM group is used as a configuration granularity of QCL information, setting a configuration granularity of QCL information based on a reference signal port is equivalent to configuring a QCL relationship based on a transport layer, so that QCL information of different reference signal ports can be flexibly configured, to improve a success rate of performing channel estimation or channel measurement on the transport layer by the reference signal port, and improve communication efficiency.

In a possible implementation of the second aspect of this embodiment of this application, the first indication information is further used to configure a second reference signal port, and the configuration further indicates second QCL information of the second reference signal port. The receive end may further determine the second QCL information based on the first indication information.

Based on the foregoing technical solution, the first indication information may be further used to perform QCL configuration on other reference signal ports than the first reference signal port, for example, perform QCL configuration on the second reference signal port.

It should be noted that the first reference signal port and the second reference signal port are different reference signal ports, and the first reference signal port and the second reference signal port may belong to a same DMRS CDM group, or may belong to different DMRS CDM groups. This is not limited herein.

In a possible implementation of the second aspect of this embodiment of this application, the first QCL information is different from the second QCL information.

Based on the foregoing technical solution, the first QCL information indicating a radio channel feature corresponding to the first reference signal port may be different from the second QCL information indicating a radio channel feature corresponding to the second reference signal port, so that the receive end may subsequently separately perform channel estimation or channel demodulation on transport layers corresponding to different reference signal ports by using different QCL information.

Optionally, the first QCL information is the same as the second QCL information.

In a possible implementation of the second aspect of this embodiment of this application, the first QCL information includes first-type QCL information.

Based on the foregoing technical solution, the first QCL information of the first reference signal port may indicate, by using a plurality of types (types), a plurality of radio channel features corresponding to the first reference signal port. The first indication information used to configure the first reference signal port may be specifically used to configure at least one-type QCL information in the first QCL information, for example, the first-type QCL information.

Optionally, the first QCL information may further include another-type QCL information, for example, second-type QCL information, third-type QCL information, or another-type QCL information.

In a possible implementation of the second aspect of this embodiment of this application, the second QCL information includes first-type QCL information.

Based on the foregoing technical solution, the second QCL information of the second reference signal port may indicate, by using a plurality of types, a plurality of radio channel features corresponding to the second reference signal port. The first indication information used to configure the second reference signal port may be specifically used to configure at least one-type QCL information in the second QCL information, for example, the first-type QCL information.

Optionally, the second QCL information may further include another-type QCL information, for example, second-type QCL information, third-type QCL information, or another-type QCL information.

In a possible implementation of the second aspect of this embodiment of this application, the first-type QCL information in the first QCL information is different from the first-type QCL information in the second QCL information.

Based on the foregoing technical solution, the first-type QCL information in the first QCL information indicating the radio channel feature corresponding to the first reference signal port may be different from the second-type QCL information in the second QCL information indicating the same radio channel feature corresponding to the second reference signal port, so that the receive end may subsequently separately perform channel estimation or channel demodulation on transport layers corresponding to different reference signal ports by using different first-type QCL information.

Optionally, the first-type QCL information in the first QCL information is the same as the first-type QCL information in the second QCL information.

In a possible implementation of the second aspect of this embodiment of this application, the first QCL information is determined by using QCL information of at least one first signal, and the first signal includes at least one of the following:
a CSI-RS, an SSB, and a DMRS.

Based on the foregoing technical solution, the configuration of the first indication information may indicate that the first QCL information may be derived from QCL information of another signal, that is, the first QCL information may be determined by using the QCL information of the at least one first signal, and the first signal may be at least one of the CSI-RS, the SSB, or the DMRS, so that the first QCL information may be flexibly configured in a plurality of implementations.

In a possible implementation of the second aspect of this embodiment of this application, the first-type QCL information in the first QCL information is determined by using QCL information of at least one second signal, and the second signal includes at least one of the following:
the CSI-RS, the SSB, and the DMRS.

Based on the foregoing technical solution, the configuration of the first indication information may indicate that QCL information of a type in the first QCL information, for example, the first-type QCL information in the first QCL information, may be derived from QCL information of another signal, that is, the first-type QCL information in the first QCL information may be determined by using the QCL information of the at least one second signal, and the first signal may be at least one of the CSI-RS, the SSB, or the DMRS, so that the second QCL information may be flexibly configured in a plurality of implementations.

In a possible implementation of the second aspect of this embodiment of this application, the method further includes: The receive end receives second indication information from the transmit end, where the second indication information indicates a frequency domain resource corresponding to the first QCL information; and then the receive end determines the frequency domain resource corresponding to the first QCL information based on the second indication information.

Optionally, the second indication information is preconfigured on the receive end.

Optionally, the second indication information and the first indication information are carried in a same message (for example, a DCI message), or the second indication information and the first indication information are carried in different messages.

Based on the foregoing technical solution, the receive end may further receive, from the transmit end, the second indication information indicating the frequency domain resource corresponding to the first QCL information, that is, the transmit end may configure the corresponding frequency domain resource for the first QCL information of the first reference signal port, so that the receive end may subsequently perform channel estimation or channel measurement on the first reference signal port on the specified frequency domain resource based on the second indication information by using the first QCL information.

In a possible implementation of the second aspect of this embodiment of this application, the method further includes: The receive end receives third indication information from the transmit end, where the third indication information indicates a frequency domain resource corresponding to the first-type QCL information in the first QCL information; and then the receive end determines the frequency domain resource corresponding to the first-type QCL information in the first QCL information based on the third indication information.

Based on the foregoing technical solution, the receive end may further receive, from the transmit end, the third indication information indicating the frequency domain resource corresponding to the first-type QCL information in the first QCL information, that is, the transmit end may configure the corresponding frequency domain resource for the first-type QCL information in the first QCL information of the first reference signal port, so that the receive end may subsequently perform channel estimation or channel measurement on the first reference signal port on the specified frequency domain resource based on the third indication information by using the first-type QCL information in the first QCL information.

Optionally, the third indication information is preconfigured on the receive end.

Optionally, the third indication information and the first indication information are carried in a same message (for example, a DCI message), or the third indication information and the first indication information are carried in different messages.

In a possible implementation of the second aspect of this embodiment of this application, the first reference signal port is included in a first reference signal port group, the first reference signal port group includes one or more reference signal ports, and QCL information of the one or more reference signal ports is associated with the first reference signal port group.

Based on the foregoing technical solution, same QCL information may be configured for one or more reference signal ports in a same reference signal port group, or one or more reference signal ports having same QCL information are considered as a same reference signal port group. The QCL information of the one or more reference signal ports in the first reference signal port group is associated with the first reference signal port group, for example, associated with a group identifier, a group location, a group number, or another information of the first reference signal port group.

In a possible implementation of the second aspect of this embodiment of this application, the first reference signal port is included in the first reference signal port group, the first reference signal port group includes the one or more reference signal ports, and QCL information of a same type of the one or more reference signal ports is associated with the first reference signal port group.

Based on the foregoing technical solution, same QCL information of a type may be configured for one or more reference signal ports in a same reference signal port group, or one or more reference signal ports having same QCL information of a type are considered as a same reference signal port group. The QCL information of the same type of the one or more reference signal ports in the first reference signal port group is associated with the first reference signal port group, for example, associated with a group identifier, a group location, a group number, or another information of the first reference signal port group.

In a possible implementation of the second aspect of this embodiment of this application, the method further includes: The receive end receives fourth indication information from the transmit end, where the fourth indication information indicates a frequency domain resource corresponding to the QCL information of the first reference signal port group; and then the receive end determines the frequency domain resource corresponding to the first reference signal port group based on the fourth indication information.

Optionally, the fourth indication information is preconfigured on the receive end.

Optionally, the fourth indication information and the first indication information are carried in a same message (for example, a DCI message), or the fourth indication information and the first indication information are carried in different messages.

Based on the foregoing technical solution, the receive end may further receive, from the transmit end, the fourth indication information indicating the frequency domain resource corresponding to the QCL information of the first reference signal port group, that is, the transmit end may configure the frequency domain resource for the QCL information of the first reference signal port group, so that the receive end may subsequently perform channel estimation or channel measurement on the first reference signal port group on the specified frequency domain resource based on the fourth indication information by using the QCL information of the first reference signal port group.

In a possible implementation of the second aspect of this embodiment of this application, the method further includes: The receive end receives fifth indication information from the transmit end, where the fifth indication information indicates a frequency domain resource corresponding to first-type QCL information in the QCL information of the first reference signal port group; and then the receive end determines the frequency domain resource corresponding to the first-type QCL information in the QCL information of the first reference signal port group based on the fifth indication information.

Optionally, the fifth indication information is preconfigured on the receive end.

Optionally, the fifth indication information and the first indication information are carried in a same message (for example, a DCI message), or the fifth indication information and the first indication information are carried in different messages.

Based on the foregoing technical solution, the transmit end may further send, to the receive end, the fifth indication information indicating the frequency domain resource corresponding to the first-type QCL information in the QCL information of the first reference signal port group, that is, the transmit end may configure the corresponding frequency domain resource based on QCL information of a type of the first reference signal port group, so that the receive end may subsequently perform channel estimation or channel measurement on the first reference signal port group on the specified frequency domain resource based on the fifth indication information by using the first-type QCL information in the QCL information of the first reference signal port group.

In a possible implementation of the second aspect of this embodiment of this application, the first reference signal port is a DMRS port or a CSI-RS port.

Based on the foregoing technical solution, the first reference signal port may be the DMRS port or the CSI-RS port, so that the solution is applicable to configuration of different reference signal ports.

A third aspect of an embodiment of this application provides a communication apparatus, including:
a processing unit, configured to determine first indication information, where the first indication information is used to configure a first reference signal port, and the configuration indicates first quasi co-location QCL information of the first reference signal port; and
a transceiver unit, configured to send the first indication information.

In a possible implementation of the third aspect of this embodiment of this application, the first indication information is further used to configure a second reference signal port, and the configuration further indicates second QCL information of the second reference signal port.

In a possible implementation of the third aspect of this embodiment of this application, the first QCL information is different from the second QCL information.

In a possible implementation of the third aspect of this embodiment of this application, the first QCL information includes first-type QCL information.

In a possible implementation of the third aspect of this embodiment of this application, the second QCL information includes first-type QCL information.

In a possible implementation of the third aspect of this embodiment of this application, the first-type QCL information in the first QCL information is different from the first-type QCL information in the second QCL information.

In a possible implementation of the third aspect of this embodiment of this application, the first QCL information is determined by using QCL information of at least one first signal, and the first signal includes at least one of the following:
a CSI-RS, an SSB, and a DMRS.

In a possible implementation of the third aspect of this embodiment of this application, the first-type QCL information in the first QCL information is determined by using QCL information of at least one second signal, and the second signal includes at least one of the following:
the CSI-RS, the SSB, and the DMRS.

In a possible implementation of the third aspect of this embodiment of this application, the processing unit is further configured to determine second indication information, where the second indication information indicates a frequency domain resource corresponding to the first QCL information; and
the transceiver unit is further configured to send the second indication information.

In a possible implementation of the third aspect of this embodiment of this application, the processing unit is further configured to determine third indication information, where the third indication information indicates a frequency domain resource corresponding to the first-type QCL information in the first QCL information; and
the transceiver unit is further configured to send the third indication information.

In a possible implementation of the third aspect of this embodiment of this application, the first reference signal port is included in a first reference signal port group, the first reference signal port group includes one or more reference signal ports, and QCL information of the one or more reference signal ports is associated with the first reference signal port group.

In a possible implementation of the third aspect of this embodiment of this application, the first reference signal port is included in the first reference signal port group, the first reference signal port group includes the one or more reference signal ports, and QCL information of a same type of the one or more reference signal ports is associated with the first reference signal port group.

In a possible implementation of the third aspect of this embodiment of this application, the processing unit is further configured to determine fourth indication information, where the fourth indication information indicates a frequency domain resource corresponding to the QCL information of the first reference signal port group; and
the transceiver unit is further configured to send the fourth indication information.

In a possible implementation of the third aspect of this embodiment of this application, the processing unit is further configured to determine fifth indication information, where the fifth indication information indicates a frequency domain resource corresponding to first-type QCL information in the QCL information of the first reference signal port group; and
the transceiver unit is further configured to send the fourth indication information.

In a possible implementation of the third aspect of this embodiment of this application, the first reference signal port is a DMRS port or a CSI-RS port.

In the third aspect of this embodiment of this application, composition modules of the communication apparatus may be further configured to perform the steps performed in the possible implementations of the first aspect. For details, refer to the first aspect. Details are not described herein again.

A fourth aspect of an embodiment of this application provides a communication apparatus, including:
a transceiver unit, configured to receive first indication information, where the first indication information is used to configure a first reference signal port, and the configuration indicates first quasi co-location QCL information of the first reference signal port; and
a processing unit, configured to determine the first QCL information based on the first indication information.

In a possible implementation of the fourth aspect of this embodiment of this application, the first indication information is further used to configure a second reference signal port, and the configuration further indicates second QCL information of the second reference signal port. The processing unit is further configured to determine the second QCL information based on the first indication information.

In a possible implementation of the fourth aspect of this embodiment of this application, the first QCL information is different from the second QCL information.

In a possible implementation of the fourth aspect of this embodiment of this application, the first QCL information includes first-type QCL information.

In a possible implementation of the fourth aspect of this embodiment of this application, the second QCL information includes first-type QCL information.

In a possible implementation of the fourth aspect of this embodiment of this application, the first-type QCL information in the first QCL information is different from the first-type QCL information in the second QCL information.

In a possible implementation of the fourth aspect of this embodiment of this application, the first QCL information is determined by using QCL information of at least one first signal, and the first signal includes at least one of the following:
a CSI-RS, an SSB, and a DMRS.

In a possible implementation of the fourth aspect of this embodiment of this application, the first-type QCL information in the first QCL information is determined by using QCL information of at least one second signal, and the second signal includes at least one of the following:
the CSI-RS, the SSB, and the DMRS.

In a possible implementation of the fourth aspect of this embodiment of this application, the transceiver unit is further configured to receive second indication information, where the second indication information indicates a frequency domain resource corresponding to the first QCL information; and
the processing unit is further configured to determine the frequency domain resource corresponding to the first reference signal port based on the second indication information.

In a possible implementation of the fourth aspect of this embodiment of this application, the transceiver unit is further configured to receive third indication information, where the third indication information indicates a frequency domain resource corresponding to the first-type QCL information in the first QCL information; and
the processing unit is further configured to determine the frequency domain resource corresponding to the first-type QCL information in the first QCL information based on the third indication information.

In a possible implementation of the fourth aspect of this embodiment of this application, the first reference signal port is included in a first reference signal port group, the first reference signal port group includes one or more reference signal ports, and QCL information of the one or more reference signal ports is associated with the first reference signal port group.

In a possible implementation of the fourth aspect of this embodiment of this application, the first reference signal port is included in the first reference signal port group, the first reference signal port group includes the one or more reference signal ports, and QCL information of a same type of the one or more reference signal ports is associated with the first reference signal port group.

In a possible implementation of the fourth aspect of this embodiment of this application, the transceiver unit is further configured to receive fourth indication information, where the fourth indication information indicates a frequency domain resource corresponding to the QCL information of the first reference signal port group; and
the processing unit is further configured to determine the frequency domain resource corresponding to the first reference signal port group based on the fourth indication information.

In a possible implementation of the fourth aspect of this embodiment of this application, the transceiver unit is further configured to receive fifth indication information, where the fifth indication information indicates a frequency domain resource corresponding to first-type QCL information in the QCL information of the first reference signal port group; and
the processing unit is further configured to determine the frequency domain resource corresponding to the first-type QCL information in the QCL information of the first reference signal port group based on the fifth indication information.

In a possible implementation of the fourth aspect of this embodiment of this application, the first reference signal port is a DMRS port or a CSI-RS port.

In the fourth aspect of this embodiment of this application, composition modules of the communication apparatus may be further configured to perform the steps performed in the possible implementations of the second aspect. For details, refer to the second aspect. Details are not described herein again.

A fifth aspect of an embodiment of this application provides a communication apparatus, including at least one processor, where the at least one processor is coupled to a memory;
the memory is configured to store a program or instructions; and
the at least one processor is configured to execute the program or the instructions, to enable the apparatus to implement the method according to the first aspect or any possible implementation of the first aspect, or enable the apparatus to implement the method according to the second aspect or any possible implementation of the second aspect.

A sixth aspect of an embodiment of this application provides a communication apparatus, including at least one logic circuit and an input/output interface, where
the input/output interface is configured to output a first signal; and
the logic circuit is configured to perform the method according to the first aspect or any possible implementation of the first aspect.

A seventh aspect of an embodiment of this application provides a communication apparatus, including at least one logic circuit and an input/output interface, where
the input/output interface is configured to input a first signal; and
the logic circuit is configured to perform the method according to the second aspect or any possible implementation of the second aspect.

An eighth aspect of an embodiment of this application provides a computer-readable storage medium storing one or more computer-executable instructions. When the computer-executable instructions are executed by a processor, the processor performs the method according to the first aspect or any possible implementation of the first aspect.

A ninth aspect of an embodiment of this application provides a computer-readable storage medium storing one or more computer-executable instructions. When the computer-executable instructions are executed by a processor, the processor performs the method according to the second aspect or any possible implementation of the second aspect.

A tenth aspect of an embodiment of this application provides a computer program product (or referred to as a computer program) storing one or more computers. When the computer program product is executed by a processor, the processor performs the method according to the first aspect or any possible implementation of the first aspect.

An eleventh aspect of an embodiment of this application provides a computer program product storing one or more computers. When the computer program product is executed by a processor, the processor performs the method according to the second aspect or any possible implementation of the second aspect.

A twelfth aspect of an embodiment of this application provides a chip system. The chip system includes at least one processor, configured to support a first communication apparatus in implementing the function in the first aspect or any possible implementation of the first aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

A thirteenth aspect of an embodiment of this application provides a chip system. The chip system includes at least one processor, configured to support a second communication apparatus in implementing the function in the second aspect or any possible implementation of the second aspect.

In a possible design, the chip system may further include a memory. The memory is configured to store program instructions and data that are necessary for the second communication apparatus. The chip system may include a chip, or may include a chip and another discrete component. Optionally, the chip system further includes an interface circuit, and the interface circuit provides program instructions and/or data for the at least one processor.

A fourteenth aspect of an embodiment of this application provides a communication system, where the communication system includes a first communication apparatus in the third aspect and a second communication apparatus in the fourth aspect, and/or the communication system includes a first communication apparatus in the fifth aspect, and/or the communication system includes a first communication apparatus in the sixth aspect and a second communication apparatus in the seventh aspect.

For technical effects of any design manner in the third aspect to the fourteenth aspect, refer to technical effects of different implementations of the first aspect or the second aspect. Details are not described herein again.

It should be understood that, for a component in a device, the foregoing "sending" may be referred to as "output", and the foregoing "receiving" may be referred to as "input".

It can be learned from the foregoing technical solution that the transmit end first determines the first indication information, where the first indication information is used to perform QCL configuration on a reference signal port; and then the transmit end sends the first indication information. Compared with a conventional manner in which a DMRS CDM group is used as a granularity for setting a QCL relationship, flexible QCL assumption derivation can be performed on each reference signal port, which is equivalent to configuring a QCL relationship based on a transport layer, enabling accurate matching channel estimation, and improving communication efficiency.

### BRIEF DESCRIPTION OF DRAWINGS

FIG. 1 is a schematic diagram of a communication system according to an embodiment of this application;
FIG. 2 is another schematic diagram of a communication system according to an embodiment of this application;
FIG. 3 is a schematic diagram of a communication method according to an embodiment of this application;
FIG. 4 is a schematic diagram of a communication method according to an embodiment of this application;
FIG. 5a is a schematic diagram of a communication method according to an embodiment of this application;
FIG. 5b is a schematic diagram of a communication method according to an embodiment of this application;
FIG. 6a is a schematic diagram of a communication method according to an embodiment of this application;
FIG. 6b is a schematic diagram of a communication method according to an embodiment of this application;
FIG. 7 is a schematic diagram of a communication apparatus according to an embodiment of this application;
FIG. 8 is a schematic diagram of a communication apparatus according to an embodiment of this application;
FIG. 9 is a schematic diagram of a communication apparatus according to an embodiment of this application; and
FIG. 10 is a schematic diagram of a communication apparatus according to an embodiment of this application.

### DESCRIPTION OF EMBODIMENTS

The following describes technical solutions in embodiments of this application with reference to the accompanying drawings in embodiments of this application. Apparently, the described embodiments are merely some rather than all of embodiments of this application. All other embodiments obtained by a person of ordinary skill in the art based on embodiments of this application without creative efforts shall fall within the protection scope of this application.

First, some terms in embodiments of this application are explained for convenient understanding by a person skilled in the art.

(1) Terminal device: The terminal device may be a wireless terminal device that can receive scheduling and indication information from a network device. The wireless terminal device may be a device that provides a user with voice and/or data connectivity, a handheld device having a wireless connection function, or another processing device connected to a wireless modem.

The terminal device may communicate with one or more core networks or the Internet through a radio access network (radio access network, RAN). The terminal device may be a mobile terminal device, for example, a mobile phone (or referred to as a "cellular" phone or a mobile phone (mobile phone)), a computer, or a data card. For example, the terminal device may be a portable, pocket-sized, handheld, computer built-in, or vehicle-mounted mobile apparatus that exchanges voice and/or data with the radio access network. For example, the wireless terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), a customer premises equipment (customer premises equipment, CPE), a terminal (terminal), user equipment (user equipment, UE), a mobile terminal (mobile terminal, MT), or the like. The terminal device may alternatively be a wearable device and a terminal device in a next generation communication system, for example, a terminal device in 5G communication system or a terminal device in a future evolved public land mobile network (public land mobile network, PLMN).

(2) Network device: The network device may be a device in a wireless network. For example, the network device may be a radio access network (radio access network, RAN) node

(or device), or may be referred to as a base station, through which the terminal device accesses the wireless network. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

The network device can send configuration information (for example, carried in a scheduling message and/or an indication message) to the terminal device. The terminal device further performs network configuration based on the configuration information, so that the network configurations of the network device and the terminal device are aligned. Alternatively, through a network configuration preset in the network device and a network configuration preset in the terminal device, the network configurations of the network device and the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

(3) Configuration and preconfiguration: In this application, both the configuration and the preconfiguration are used. The configuration means that a network device such as a base station or a server sends configuration information of some parameters or parameter values to a terminal by using a message or signaling, so that the terminal determines a communication parameter or a transmission resource based on the values or the information. Similar to the configuration, the preconfiguration may be a manner in which a network device such as a base station or a server sends parameter information or a value to a terminal through a communication link or a carrier. Alternatively, the preconfiguration may be a manner in which a corresponding parameter or parameter value may be defined (for example, a value of a parameter is specified in a standard), or a manner in which a related parameter or value is written into a terminal device in advance. This is not limited in this application. Further, these values and parameters may be changed or updated.

(4) DMRS port indication: When scheduling data, for example, scheduling physical downlink shared channel (physical downlink shared channel, PDSCH) data, the network device needs to indicate a corresponding DMRS port, including a quantity of DMRS ports and a DMRS port number. Physical resources occupied by DMRS ports corresponding to different DMRS port numbers are orthogonal, and the physical resources include one or more of a space resource, a time domain resource, and a frequency domain resource. The quantity of DMRS ports is equal to a quantity of transport layers of the PDSCH data, and each DMRS port is in a one-to-one correspondence with each transport layer, and channel estimation needs to be performed on a corresponding DMRS port for demodulating a transport layer. If different terminal devices occupy a same time-frequency resource to transmit the PDSCH data, the network device needs to allocate different DMRS port numbers to ensure that DMRSs are orthogonal.

(5) Coordinated multiple points transmission/reception mechanism: In downlink transmission, a terminal device may simultaneously communicate with at least one network device, that is, simultaneously receive data from a plurality of network devices. This transmission mode is referred to as coordinated multiple points transmission/reception (coordinated multiple points transmission/reception, CoMP). The at least one network device forms one coordinating cluster to simultaneously communicate with the terminal device. Network devices in a coordinating cluster may be respectively connected to different control nodes, and the control nodes may exchange information with each other, for example, exchange scheduling policy information to implement coordinated transmission, or all network devices in a coordinating cluster are connected to a same control node, and the control node receives channel state information (for example, CSI or RSRP) that is reported by terminal devices and that is collected by the network devices in the coordinating cluster, performs unified scheduling on the terminal devices in the coordinating cluster based on channel state information of all the terminal devices in the coordinating cluster, and then exchanges a scheduling policy with the network devices connected to the control node. Then, each network device notifies a terminal device of each network device by using downlink control information (download control information, DCI) signaling carried on a physical downlink control channel (physical downlink control channel, PDCCH). Based on a transmission policy of a plurality of network devices in a coordinating cluster for a terminal device, the CoMP transmission mode may include the following content.

Dynamic point switching (dynamic point switching, DPS): For a dynamic change of a network device that performs data transmission on a terminal device, a network device with a good channel condition is selected as far as possible to perform data scheduling on a current terminal device, that is, a plurality of network devices transmit data to a terminal device in a time-sharing manner.

Non-coherent joint transmission (non-coherent joint transmission, NC-JT): A plurality of network devices simultaneously transmit data to a terminal device, and perform independent precoding on antennas of the plurality of network device, that is, each network device independently selects an optimal precoding matrix to perform joint phase and amplitude weighting between antennas of the network device. In this mechanism, phase calibration does not need to be performed on the antennas of the plurality of network devices.

Coherent joint transmission (coherent joint transmission, CJT): A plurality of network devices simultaneously transmit data to a terminal device, and perform j oint precoding on antennas of the plurality of network devices, that is, the plurality of network devices jointly select an optimal precoding matrix to perform joint phase and amplitude weighting between the antennas of the plurality of network devices. In this mechanism, phase calibration needs to be performed on the antennas of the plurality of network devices.

There is a serving network device in the network devices in the coordinating cluster, for example, a serving base station (serving TRP)/a serving cell (serving cell). A function of the serving base station is to make a scheduling decision to perform data communication on the terminal device, and perform MAC layer and physical layer communication with the terminal device, for example, determine time-frequency resources of a control channel (PDCCH) and a data channel (PUSCH/PDSCH) of the terminal device based on the scheduling decision, send DCI signaling on the PDCCH, send data on the PUSCH/PDSCH, and send a reference signal (reference signal, RS). In addition to the serving base station, another network device in the coordinating cluster is referred to as a coordinate base station (coordinate TRP)/a coordinate cell (coordinate TRP). A function of the coordinate base station is to perform physical layer communication with the terminal device based on the scheduling decision of the serving base station, for example, send the DCI signaling on the PDCCH based on the scheduling decision of the serving base station, send the data on the PUSCH/PDSCH, and send the RS. For example, the serving base station is a TRP 1, and the coordinate base station is a TRP 2. The TRP 1 serves as the serving base station to make a scheduling decision for the terminal device and send DCI. The DCI may indicate to schedule the TRP 1/the TRP 2 to perform data transmission, that is, the DCI carries scheduling information of the two TRPs.

DMRS ports corresponding to PDSCHs transmitted by the two TRPs need to occupy different CDM groups, and each CDM group/each PDSCH corresponds to a transmission configuration indicator (transmission configuration indicator, TCI) state. The TCI state (TCI-state) indicates quasi-co-location (quasi-co-location, QCL) assumption information (also referred to as QCL information). The QCL assumption information is used to assist in describing receive side beamforming information and a receiving procedure of a terminal device. QCL assumption information of four types is defined in a current standard, and the QCL assumption information of the four types is: QCL types (types) A: Doppler shift (doppler shift), Doppler spread (doppler spread), average channel delay (average delay), and delay spread (delay spread); QCL types B: doppler shift and doppler spread; QCL types C: average delay and doppler shift; and QCL types D: spatial reception parameter (spatial rx parameter). To reduce QCL information indication overheads of the network device for the terminal device, a QCL information indication of the PDSCH or the PDCCH indicates that a DM-RS port of the PDCCH (or the PDSCH) and one or more reference signal resources meet a QCL assumption relationship, so that the QCL information can be obtained by using the associated one or more reference signal resources, and the PDSCH or the PDCCH can be received by using the information. For example, the reference signal may be a channel state information reference signal (channel state information reference signal, CSI-RS). In addition, the DM-RS and the CSI-RS have a same QCL Type D assumption. In this case, the DM-RS and the CSI-RS have a same receive beam. Therefore, UE may obtain, based on an associated reference signal resource index through inference, information about a receive beam for receiving the PDCCH (or the PDSCH). The QCL information is a spatial feature parameter, and describes a spatial channel feature between antenna ports included in two associated reference signals. This helps the terminal device complete a receive side beamforming or a receiving processing process based on the QCL information.

(6) In this application, "indicating" may include a direct indication and an indirect indication. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example, but not limited to, one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (CE). The physical layer signaling includes, for example, downlink control information (downlink control information, DCI).

(7) The terms "system" and "network" may be used interchangeably in embodiments of this application. "At least one" means one or more, and "a plurality of" means two or more. The term "and/or" is an association relationship for describing associated objects and represents that three relationships may exist. For example, A and/or B may represent the following three cases: Only A exists, both A and B exist, and only B exists, where A and B may be singular or plural. A character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise stated, ordinal numbers such as "first" and "second" mentioned in embodiments of this application are for distinguishing between a plurality of objects, but are not intended to limit a sequence, a time sequence, priorities, or importance of the plurality of objects.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, in the communication system, an entity sends configuration information to another entity, and sends data to the another entity or receives data sent by the another entity. The another entity receives the configuration information, and sends data to the configuration information sending entity based on the configuration information or receives data sent by the configuration information sending entity. This application may be applied to a terminal device in a connected state or an active state (ACTIVE), or may be applied to a terminal device in a non-connected state (INACTIVE) or an idle state (IDLE).

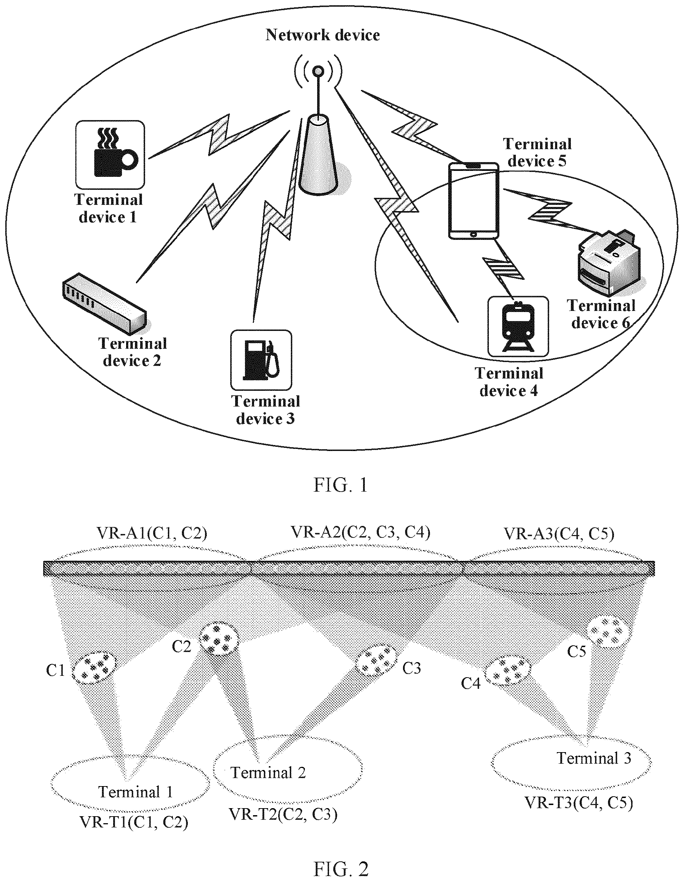

FIG. 1 is a schematic diagram of a communication system according to this application. FIG. 1 shows an example of a network device 101 and six terminal devices. The six terminal devices are respectively a terminal device 1, a terminal device 2, a terminal device 3, a terminal device 4, a terminal device 5, a terminal device 6, and the like. In the example shown in FIG. 1, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description. A transmit end may be a network device or a terminal device, and a receive end may be a network device or a terminal device.

As shown in FIG. 1, a configuration information sending entity may be a network device. An example in which the network device is a base station (Base Station) and each terminal device is UE is used for description. Configuration information receiving entities may be UE 1 to UE 6. In this case, the base station and the UE 1 to the UE 6 form a communication system. In the communication system, the UE 1 to the UE 6 may send uplink data to the network device, and the network device needs to receive the uplink data sent by the UE 1 to the UE 6. In addition, the network device may send configuration information to the UE 1 to the UE 6.

In addition, in FIG. 1, the UE 4 to the UE 6 may alternatively form a communication system. In this case, both the configuration information sending entity and the configuration information receiving entity may be UEs. The UE 5 serves as the network device, that is, the configuration information sending entity. The UE 4 and the UE 6 serve as the terminal devices, that is, the configuration information receiving entities. For example, in an Internet of Vehicles system, the UE 5 separately sends configuration information to the UE 4 and the UE 6, and receives uplink data sent by the UE 4 and the UE 6. Correspondingly, the UE 4 and the UE 6 receive the configuration information sent by the UE 5, and send the uplink data to the UE 5.

The communication system shown in FIG. 1 is used as an example. In the communication system, that antenna ports are quasi co-located (quasi co-located, QCL) is a state assumption between the antenna ports. If one antenna port of the transmit end is QCL with another antenna port, it means that the receive end may assume that a large-scale feature (or referred to as a radio channel feature) of a signal received from one antenna port (or a radio channel corresponding to the antenna port) is completely or partially the same as a large-scale feature of a signal received from another antenna port (or a radio channel corresponding to the antenna port). The large-scale feature of the signal may include a Doppler shift, a Doppler spread, an average delay, a delay spread, and the like.

Currently, the QCL may be applied to a plurality of types of signals, for example, a demodulation reference signal (demodulation reference signal, DMRS) and a channel state information reference signal (channel state information reference signal, CSI-RS), transmitted through an antenna port. The DMRS is used as an example, the transmit end may perform a unified QCL assumption on a plurality of different DMRS ports (DMRS ports) included in a DMRS code division multiplexing (code division multiplexing, CDM) group. Generally, one DMRS port corresponds to one transport layer and is used to perform channel estimation on the transport layer. The receive end may perform, based on the unified QCL assumption, channel estimation on a plurality of transport layers corresponding to the plurality of DMRS ports in the DMRS CDM group, to implement data demodulation.

However, when the receive end device and the transmit end device are in a scenario in which a channel has a spatial non-stationary feature or a multi-TRP transmission scenario, QCL assumptions of DMRSs corresponding to different transport layers of a same DMRS CDM group may be different (QCL assumptions of different transport layers corresponding to different DMRS CDM groups may also be different). The following uses two common scenarios as examples for description.

For example, in an extremely large aperture array (extremely large aperture array, ELAA), because an antenna aperture is large and different channels have a spatial non-stationary feature, clusters (multipath) seen by each antenna are not exactly the same.

FIG. 2 is used as an implementation example of the ELAA. In FIG. 2, a transmit end is a network device, a transmit panel of the network device includes panels numbered A1, A2, and A3, and a receive end includes terminal devices (Terminals) numbered T1, T2, and T3. When the transmit end and the receive end are in an ELAA scenario, "VR-A1" in the figure indicates that a visible region (visible region, VR) of the transmit panel A1 includes a cluster 1 (a cluster 1, denoted as C1) and a cluster 2 (a cluster 2, denoted as C2). Similarly, "VR-A2" indicates that a VR of the transmit panel A2 includes C2, C3, and C4, and "VR-A3" indicates that a VR of the transmit panel A3 includes C4 and C5. In addition, "VR-T1" indicates that a VR of the terminal device T1 includes C1 and C2, "VR-T2" indicates that a VR of the terminal device T2 includes C2 and C3, and "VR-T1" indicates that a VR of the terminal device T1 includes C4 and C5. An antenna of the transmit panel 1 may be considered as an antenna cluster 1, and an antenna of the transmit panel 2 may be considered as an antenna cluster 2. For ELAA data transmission, due to the spatial non-stationary feature, visible clusters of each antenna cluster are different. As a result, different transport layers are from different antenna clusters, and channel features (QCL assumptions) of different DMRS ports are different.

For another example, in a multi-TRP joint transmission scenario, for example, in a non-coherent joint transmission (non-coherent joint transmission, NC-JT) scenario or a coherent joint transmission (coherent joint transmission, CJT) scenario, due to resource scheduling or the like, different transport layers perform joint precoding and transmission from TRPs that are not completely the same on a scheduled frequency domain resource (for example, a resource block group (resource block group, RBG)). In this case, QCL assumptions (channel features) of DMRS ports corresponding to different data layers are also different.

It is clear that a manner in which the receive end performs channel estimation based on the QCL assumption of the DMRS CDM group easily causes inaccurate channel estimation on the DMRS port and further affects effect of data demodulation. Similarly, when the reference signal port is another reference signal port, for example, a CSI-RS port, channel measurement is likely to be inaccurate in the scenario, which further affects a data transmission effect and affects communication efficiency.

Therefore, embodiments of this application provide a communication method and a communication apparatus. A configuration granularity of QCL information is set based on a reference signal port. Compared with a conventional manner in which a DMRS CDM group is used as a configuration granularity of QCL information, QCL information of different reference signal ports can be flexibly configured, to improve a success rate of performing channel estimation or channel measurement on a transport layer by the reference signal port, and improve communication efficiency.

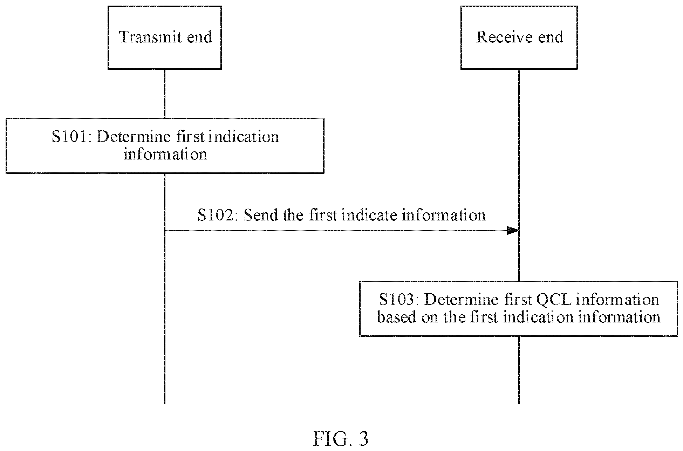

FIG. 3 is a schematic diagram of an implementation of a communication method according to an embodiment of this application. The method includes the following steps.

S101: A transmit end determines first indication information.

In this embodiment, the transmit end determines the first indication information in step S101. The first indication information is used to configure a first reference signal port, and the configuration indicates first QCL information of the first reference signal port.

In a possible implementation, the first reference signal port is a DMRS port, a CSI-RS port, or another reference signal port, so that the solution is applicable to configuration of different reference signal ports.

In a possible implementation, the first QCL information is determined by using QCL information of at least one first signal, and the first signal includes at least one of the following: a CSI-RS, a synchronization signal/physical broadcast channel block (synchronization signal/physical broadcast channel block, SS/PBCH block or SSB), and a DMRS. The SSB may also be referred to as a synchronization signal block or an initial access signal for short. The configuration of the first indication information may indicate that the first QCL information may be derived from QCL information of another signal, that is, the first QCL information may be determined by using the QCL information of the at least one first signal, and the first signal may be at least one of the CSI-RS, the SSB, or the DMRS, so that the first QCL information may be flexibly configured in a plurality of implementations. The following describes a plurality of different implementations of the first signal.

Manner 1: When the first signal includes a CSI-RS, the CSI-RS may be a CSI-RS corresponding to at least one CSI-RS port. The CSI-RS corresponding to the at least one CSI-RS port may be some or all CSI-RSs in a CSI-RS resource (CSI-RS resource), or the CSI-RS corresponding to the at least one CSI-RS port may be a set of some or all CSI-RSs in a CSI-RS resource and some or all CSI-RSs in another CSI-RS resource, or the CSI-RS corresponding to the at least one CSI-RS port may be a set of some or all CSI-RSs in a plurality of CSI-RS resources. This is not limited herein. One CSI-RS resource may be indicated by a CSI-RS resource identifier (CSI-RS resource ID).

In the manner 1, if the at least one CSI-RS port is a plurality of CSI-RS ports, some or all CSI-RS ports having same QCL information in the plurality of CSI-RS ports may be considered as a same CSI-RS port group, or some or all CSI-RS ports having same QCL information of a type in the plurality of CSI-RS ports may be considered as a same CSI-RS port group. Correspondingly, CSI-RS ports having different QCL information in the plurality of CSI-RS ports may be considered as different CSI-RS port groups, or CSI-RS ports having different QCL information of a type in the plurality of CSI-RS ports may be considered as different CSI-RS port groups.

Manner 2: When the first signal includes an SSB, the SSB may be an SSB indicated by a synchronization signal block index (SSB index), or may be an SSB set indicated by a plurality of SSB indexes.

Manner 3: When the first signal includes a DMRS, the DMRS may be a DMRS corresponding to at least one DMRS port. The DMRS corresponding to the at least one DMRS port may be some or all DMRSs in a DMRS port group, or the DMRS corresponding to the at least one DMRS port may be a set of some or all DMRSs in a DMRS port group and some or all DMRSs in another DMRS port group, or the DMRS corresponding to the at least one DMRS port may be a set of some or all DMRSs in a plurality of DMRS port groups. This is not limited herein. The DMRS port group may be indicated by an index or an identifier. For example, the DMRS port group may be a DMRS CDM group.

In a possible implementation, the first indication information in step S101 is further used to configure a second reference signal port, and the configuration further indicates second QCL information of the second reference signal port. That is, the first indication information may be further used to perform QCL configuration on other reference signal ports than the first reference signal port, for example, perform QCL configuration on the second reference signal port.

It should be noted that the first reference signal port and the second reference signal port are different reference signal ports, and the first reference signal port and the second reference signal port may belong to a same DMRS CDM group, or may belong to different DMRS CDM groups. This is not limited herein.

In addition, the first indication information may be further used to perform QCL configuration on the second reference signal port, and a third reference signal port, a fourth reference signal port, and another reference signal port that may exist, that is, the configuration indicates the second QCL information of the second reference signal port, third QCL information of the third reference signal port, fourth QCL information of the fourth reference signal port, and another QCL information of the another reference signal port. Similar to an implementation process in which the first QCL information is determined by using the QCL information of the at least one first signal, the another QCL information corresponding to the another reference signal port may also be determined by using at least one target signal. For an implementation process of the target signal, refer to the plurality of different implementations of the first signal. Details are not described herein again.

In a possible implementation, the first QCL information is different from the second QCL information. Specifically, QCL information of different reference signal ports may be different. The first QCL information indicating a radio channel feature corresponding to the first reference signal port may be different from the second QCL information indicating a radio channel feature corresponding to the second reference signal port, so that a receive end may subsequently separately perform channel estimation or channel demodulation on transport layers corresponding to different reference signal ports by using different QCL information.

Optionally, QCL information of different reference signal ports may alternatively be the same, that is, the first QCL information is the same as the second QCL information.

In a possible implementation, the first QCL information of the first reference signal port includes first-type QCL information. Specifically, the first QCL information of the first reference signal port may indicate a plurality of radio channel features corresponding to the first reference signal port by using a plurality of types (types). The first indication information used to configure the first reference signal port may be specifically used to configure at least one-type QCL information in the first QCL information, for example, the first-type QCL information.

Similarly, the first-type QCL information in the first QCL information is determined by using QCL information of at least one second signal, and the second signal includes at least one of the following: the CSI-RS, the SSB, and the DMRS. Specifically, the configuration of the first indication information may indicate that QCL information of a type in the first QCL information, for example, the first-type QCL information in the first QCL information, may be derived from QCL information of another signal, that is, the first-type QCL information in the first QCL information may be determined by using the QCL information of the at least one second signal, and the second signal may be at least one of the CSI-RS, the SSB, or the DMRS, so that the first-type QCL information in the first QCL information may be flexibly configured in a plurality of implementations. For a plurality of different implementations of the second signal, refer to the plurality of different implementations of the first signal. Details are not described herein again.

Optionally, the first QCL information may further include another-type QCL information, for example, second-type QCL information, third-type QCL information, or another-type QCL information. QCL information of different types included in the first QCL information may be represented in different manners, for example, QCL 1, QCL 2, ..., QCL type 1, QCL type 2, ..., QCL type A, QCL type B, ..., QCL type a, QCL type b, ..., or another manner. This is not limited herein.

For example, the QCL information of different types may include different combination implementations of at least the following parameters: a Doppler shift (doppler shift), a Doppler spread (doppler spread), an average channel delay (average delay), a delay spread (delay spread), a spatial reception parameter (spatial rx parameter), or another parameter indicating a radio channel feature. This is not limited herein.

In a possible implementation, the second QCL information of the second reference signal port includes first-type QCL information. Specifically, the second QCL information of the second reference signal port may indicate a plurality of radio channel features corresponding to the second reference signal port by using a plurality of types. The first indication information used to configure the second reference signal port may be specifically used to configure at least one-type QCL information in the second QCL information, for example, the first-type QCL information.

Optionally, the second QCL information may further include another-type QCL information, for example, second-type QCL information, third-type QCL information, or another-type QCL information. Similarly, QCL information of another reference signal port may also include QCL information of different types, for example, third QCL information of a third reference signal port that may exist. For all of these, refer to the plurality of implementations of different types of the first QCL information. Details are not described herein again.

In a possible implementation, the first-type QCL information in the first QCL information is different from the first-type QCL information in the second QCL information. Specifically, the first-type QCL information in the first QCL information indicating the radio channel feature corresponding to the first reference signal port may be different from the first-type QCL information in the second QCL information indicating the same radio channel feature corresponding to the second reference signal port, so that the receive end may subsequently separately perform channel estimation or channel demodulation on transport layers corresponding to different reference signal ports by using different first-type QCL information.

Optionally, the first-type QCL information in the first QCL information is the same as the first-type QCL information in the second QCL information.

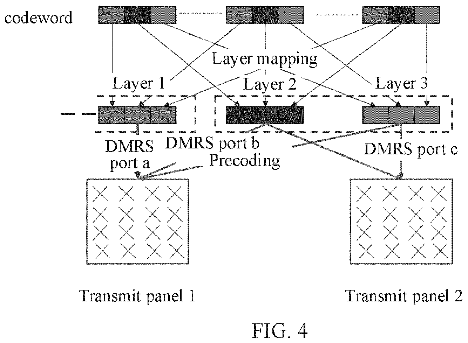

The following describes, by using a specific implementation example shown in FIG. 4, a scenario in which the transmit end includes three reference signal ports (a DMRS port is used as an example of a reference signal port) and two transmit panels. In FIG. 4, a first reference signal port is denoted as a DMRS port a, a second reference signal port is denoted as a DMRS port b, and a third reference signal port is denoted as a DMRS port c, and QCL information of different reference signal ports is determined in the implementation processes of the manner 1 and the manner 2.

As shown in FIG. 4, on a transmit end, layer mapping is performed on a codeword (codeword) to obtain three transport layers, that is, a layer 1, a layer 2, and a layer 3. Each transport layer has respective QCL information (or referred to as a QCL assumption), and any two pieces of QCL information may be the same or different. The layer 1 performs transmission through only a port a (port a) formed through precoding of an antenna of a transmit panel 1, which corresponds to first QCL information (which is denoted as a QCL1 assumption). The layer 2 and the layer 3 perform transmission through ports b&c (port b&c) formed through joint precoding of the antenna of the transmit panel 1 and an antenna of a transmit panel 2, that is, QCL information of the port b is the same as QCL information of the port c, which corresponds to second QCL information (which is denoted as a QCL2 assumption). That is, a channel feature of the transmit panel 1 corresponding to the DMRS port a is denoted as the first QCL information. A combined channel feature panel 1&2 of the transmit panels 1&2 corresponding to the DMRS port b and the DMRS port c is denoted as the second QCL information.

It should be noted that in a broad sense, an antenna used for antenna precoding in the transmit panel is a type of antenna cluster, that is, one antenna cluster includes at least one antenna.

In FIG. 4, the three transport layers perform transmission through the DMRS port a, the DMRS port b, and the DMRS port c, and QCL information (of a type) of different DMRS ports is derived by using QCL of another reference signal. For example, the first indication information may meet the following configuration manner.
(1) Type A QCL of the DMRS port a is derived from QCL of one CSI-RS port group X.
(2) Type A QCL of the DMRS port b is derived from QCL of two CSI-RS port groups Y and Z.
(3) Type A QCL of the DMRS port c is derived from the QCL of the two CSI-RS port groups Y and Z.
(4) Type B QCL of the DMRS port b is jointly derived from QCL of one CSI-RS port group Y and QCL of an SSB (SSB-index H).

X, Y, and Z are different CSI-RS port group numbers/identifiers, and H is an SSB-index.

In addition, the CSI-RS port group may have the following characteristics.
(1) One CSI-RS port group may be a CSI-RS resource (which may be specified by CSI-RS-ResourceId).
(2) One CSI-RS port group may be some CSI-RS ports (at least one CSI-RS port) in one CSI-RS resource.
(3) A plurality of CSI-RS port groups that are of a same QCL type and that are used to derive QCL may be from a same CSI-RS resource or different CSI-RS resources.

In a possible implementation, the first reference signal port is included in a first reference signal port group, the first reference signal port group includes one or more reference signal ports, and QCL information of the one or more reference signal ports is associated with the first reference signal port group. Specifically, same QCL information may be configured for one or more reference signal ports in a same reference signal port group, or one or more reference signal ports having same QCL information are considered as a same reference signal port group. The QCL information of the one or more reference signal ports in the first reference signal port group is associated with the first reference signal port group, for example, associated with a group identifier, a group location, a group number, or another information of the first reference signal port group.

Optionally, the second reference signal port may also be included in the first reference signal port group, that is, the first QCL information of the first reference signal port is the same as the second QCL information of the second reference signal port, and is the same as QCL information of another reference signal port that may exist in the first reference signal port group.

Optionally, the second reference signal port may be included in another reference signal port group, for example, a second reference signal port group, that is, the first QCL information of the first reference signal port and the second QCL information of the second reference signal port may be the same or may be different, which specifically depends on configurations of QCL information of the first reference signal port group and QCL information of the second reference signal port group.

The scenario shown in FIG. 4 is still used as an example for description herein.

Specifically, the receive end determines, in a configuration or preconfiguration manner, reference signal ports included in different reference signal port groups. For example, DMRS ports are divided into a DMRS port group A and a DMRS port group B. One or more DMRS ports (for example, the DMRS port a) included in the DMRS port group A are all the first QCL information, and one or more DMRS ports (for example, the DMRS port b and the DMRS port c) included in the DMRS port group B are all the second QCL information.

In a possible implementation, the first reference signal port is included in the first reference signal port group, the first reference signal port group includes the one or more reference signal ports, and QCL information of a same type of the one or more reference signal ports is associated with the first reference signal port group. Specifically, same QCL information of a type may be configured for one or more reference signal ports in a same reference signal port group, or one or more reference signal ports having same QCL information of a type are considered as a same reference signal port group. The QCL information of the same type of the one or more reference signal ports in the first reference signal port group is associated with the first reference signal port group, for example, associated with a group identifier, a group location, a group number, or another information of the first reference signal port group.

Optionally, the second reference signal port may also be included in the first reference signal port group, that is, the first-type QCL information in the first QCL information of the first reference signal port is the same as the first-type QCL information in the second QCL information of the second reference signal port, and is the same as first-type QCL information in QCL information of another reference signal port that may exist in the first reference signal port group.

Optionally, the second reference signal port may be included in another reference signal port group, for example, a second reference signal port group, that is, the first-type QCL information in the first QCL information of the first reference signal port and the first-type QCL information in the second QCL information of the second reference signal port may be the same or may be different, which specifically depends on configurations of first-type QCL information in the QCL information of the first reference signal port group and first-type QCL information in the QCL information of the second reference signal port group.

The scenario shown in FIG. 4 is still used as an example for description herein.

Specifically, the receive end determines, in a configuration or preconfiguration manner, reference signal ports included in different reference signal port groups. For example, DMRS ports are divided into a DMRS port group C and a DMRS port group D. One or more DMRS ports (for example, the DMRS port a) included in the DMRS port group C are all type A QCL information in the first QCL information, and one or more DMRS ports (for example, the DMRS port b and the DMRS port c) included in the DMRS port group D are all type A QCL information in the second QCL information.

The type A is merely an example, and may be further one or more of other defined types such as a type B, a type C, and a type D. For a corresponding implementation process, refer to the implementation example of the type A. Details are not described herein again.

S102: The transmit end sends first indication information to a receive end.

In this embodiment, the transmit end sends the first indication information determined in step S101 to the receive end in step S102. Correspondingly, the receive end receives, in step S102, the first indication information sent by the transmit end.

S103: The receive end determines first QCL information based on the first indication information.

In this embodiment, the receive end determines the first QCL information based on the first indication information received in step S102.

In a possible implementation, if the first indication information is further used to configure the second reference signal port, the configuration further indicates the second QCL information of the second reference signal port. In this case, the receive end may further determine the second QCL information based on the first indication information. The same applies to other embodiments below, and details are not described below.

Based on the implementation shown in FIG. 3, the transmit end sends, to the receive end, the first indication information used to perform QCL configuration on the first reference signal port, so that the receive end may perform channel estimation or channel demodulation on a transport layer corresponding to the first reference signal port based on the first QCL information. Compared with a conventional manner in which a DMRS CDM group is used as a configuration granularity of QCL information, setting a configuration granularity of QCL information based on a reference signal port is equivalent to configuring a QCL relationship based on a transport layer, so that QCL information of different reference signal ports can be flexibly configured, to improve a success rate of performing channel estimation or channel measurement on the transport layer by the reference signal port, and improve communication efficiency.

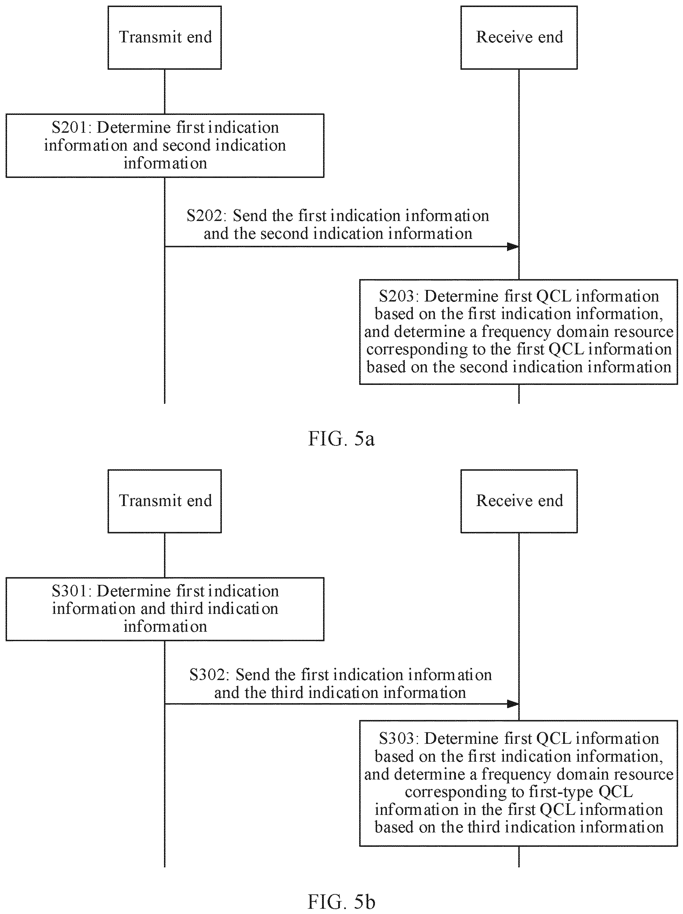

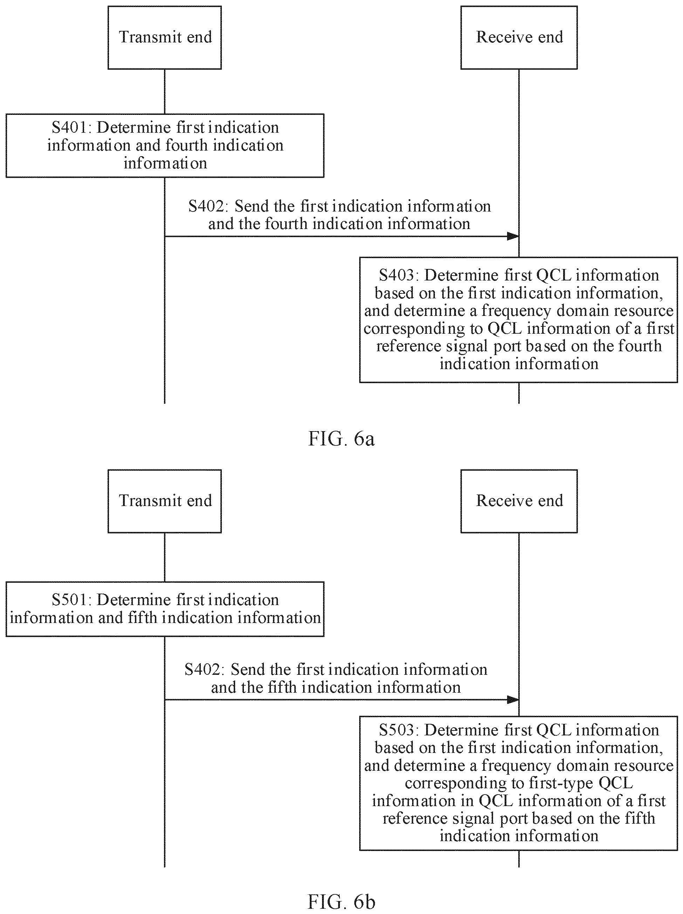

Further, the transmit end may further configure a frequency domain resource based on QCL information (or QCL information of a type in QCL information) of a plurality of reference signal ports at different transport layers, or configure a frequency domain resource for QCL information (or QCL information of a type in QCL information) of a plurality of reference signal port groups at different transport layers. Detailed descriptions are separately provided below by using FIG. 5a, FIG. 5b, FIG. 6a, and FIG. 6b.

FIG. 5a is another schematic diagram of a communication method according to an embodiment of this application. The method includes the following steps.

S201: A transmit end determines first indication information and second indication information.

In this embodiment, the transmit end determines the first indication information and the second indication information in step S201. The first indication information is used to configure a first reference signal port, and the configuration indicates first QCL information of the first reference signal port. The second indication information indicates a frequency domain resource corresponding to the first QCL information.

In a possible implementation, similar to the embodiment in FIG. 3, the first indication information in step S201 is further used to configure a second reference signal port, and the configuration further indicates second QCL information of the second reference signal port. That is, the first indication information may be further used to perform QCL configuration on other reference signal ports than the first reference signal port, for example, perform QCL configuration on the second reference signal port.

S202: The transmit end sends the first indication information and the second indication information to a receive end.

In this embodiment, the transmit end sends the first indication information and the second indication information that are determined in step S201 to the receive end in step S202. Correspondingly, the receive end receives, in step S202, the first indication information and the second indication information that are sent by the transmit end.

S203: The receive end determines first QCL information based on the first indication information, and determines a frequency domain resource corresponding to the first QCL information based on the second indication information.

In this embodiment, the receive end determines the first QCL information based on the first indication information received in step S202, and determines the frequency domain resource corresponding to the first QCL information based on the second indication information received in step S202.

It should be noted that a processing process of the first indication information in step S201 to step S203 is similar to the implementation process shown in FIG. 3. Details are not described herein again.

Optionally, the receive end may obtain the second indication information in another implementation other than FIG. 5a, for example, preconfigure the second indication information on the receive end.

In addition, in addition to indicating the frequency domain resource corresponding to the first QCL information of the first reference signal port, the second indication information may further indicate a frequency domain resource corresponding to QCL information of another reference signal port, for example, may indicate a frequency domain resource corresponding to the second QCL information of the second reference signal port, or may indicate a frequency domain resource corresponding to third QCL information of a third reference signal port and a frequency domain resource corresponding to QCL information of another reference signal port that may exist.

Optionally, in step S202, the second indication information and the first indication information are carried in a same message (for example, a radio resource control (radio resource control, RRC)/a medium access control control element (medium access control control element, MAC CE)/a DCI message), or the second indication information and the first indication information are carried in different messages.

For example, at least one indication information of the first indication information and the second indication information may alternatively be implemented in a multi-level indication manner. For example, the at least one indication information is configured in a TCI state, that is, the TCI state may indicate QCL information of one or more reference signal ports, and/or indicate a frequency domain resource corresponding to one or more pieces of QCL information. A firstlevel configuration is performed in a manner of carrying a plurality of TCI states in the RRC message, and then a second-level configuration is performed in a manner of carrying a TCI state (or a TCI state identifier) in the DCI message, so that the receive end may determine, in a twolevel indication manner, the QCL information of the one or more reference signal ports and the frequency domain resource corresponding to the one or more pieces of QCL information.

The scenario shown in FIG. 4 is still used as an example for description herein.

Specifically, in this embodiment shown in FIG. 5a, for a frequency domain resource range of a same reference signal port, all QCL types may use same QCL configuration information. That is, QCL information of different types of the DMRS port a are all used on the frequency domain resource (for example, an RBG 1, a bandwidth part (bandwidth part, BWP, which is also referred to as a bandwidth part) 1, or another frequency domain resource) indicated by the second indication information, QCL information of different types of the DMRS port b are all used on the frequency domain resource (for example, an RBG 2, a BWP 2, or another frequency domain resource) indicated by the second indication information, and QCL information of different types of the DMRS port c are all used on the frequency domain resource (for example, an RBG 3, a BWP 3, or another frequency domain resource) indicated by the second indication information. Every two of the RBG 1, the RBG 2, and the RBG 3 may be a same frequency domain resource, or frequency domain resources that do not overlap with each other, or frequency domain resources that are partially the same. This is not limited herein. Similarly, the BWP 1, the BWP 2, the BWP 3, or another frequency domain resource may also have a plurality of implementations. Details are not described herein again.

Based on the implementation solution shown in FIG. 5a, the transmit end may further send, to the receive end, the second indication information indicating the frequency domain resource corresponding to the first QCL information, that is, the transmit end may configure the corresponding frequency domain resource for the first QCL information of the first reference signal port, so that the receive end may subsequently perform channel estimation or channel measurement on the first reference signal port on the specified frequency domain resource based on the second indication information by using the first QCL information. Therefore, a corresponding frequency domain resource is configured for QCL information of each reference signal port, and frequency domain resources corresponding to QCL information of different reference signal ports may be the same or may be different. This is not limited herein.

FIG. 5b is another schematic diagram of a communication method according to an embodiment of this application. The method includes the following steps.

S301: A transmit end determines first indication information and third indication information.

In this embodiment, the transmit end determines the first indication information and the third indication information in step S301. The first indication information is used to configure a first reference signal port, and the configuration indicates first QCL information of the first reference signal port. The third indication information indicates a frequency domain resource corresponding to first-type QCL information in the first QCL information.

In a possible implementation, similar to the embodiment in FIG. 3, the first indication information in step S301 is further used to configure a second reference signal port, and the configuration further indicates second QCL information of the second reference signal port. That is, the first indication information may be further used to perform QCL configuration on other reference signal ports than the first reference signal port, for example, perform QCL configuration on the second reference signal port.

S302: The transmit end sends the first indication information and the third indication information to a receive end.

In this embodiment, the transmit end sends the first indication information and the second indication information that are determined in step S301 to the receive end in step S302. Correspondingly, the receive end receives, in step S302, the first indication information and the third indication information that are sent by the transmit end.

S303: The receive end determines first QCL information based on the first indication information, and determines a frequency domain resource corresponding to first-type QCL information in the first QCL information based on the third indication information.

In this embodiment, the receive end determines the first QCL information based on the first indication information received in step S302, and determines the frequency domain resource corresponding to the first-type QCL information in the first QCL information based on the third indication information received in step S302.

It should be noted that a processing process of the first indication information in step S301 to step S303 is similar to the implementation process shown in FIG. 3. Details are not described herein again.

Optionally, the receive end may obtain the third indication information in another implementation other than FIG. 5b, for example, preconfigure the third indication information on the receive end.

Optionally, in step S302, the third indication information and the first indication information are carried in a same message (for example, an RRC message/a MAC CE/a DCI message), or the third indication information and the first indication information are carried in different messages.

For example, at least one indication information of the first indication information and the third indication information may alternatively be implemented in a multi-level indication manner. For an implementation process, refer to the implementation in which the first indication information and the second indication information are indicated in the multi-level indication manner. Details are not described herein again.

In a possible implementation, in addition to indicating the frequency domain resource corresponding to the first type in the first QCL information of the first reference signal port, the third indication information may further indicate a frequency domain resource corresponding to a first type in QCL information of another reference signal port, for example, may indicate a frequency domain resource corresponding to a first type in the second QCL information of the second reference signal port, or may indicate a frequency domain resource corresponding to a first type in third QCL information of a third reference signal port and a frequency domain resource corresponding to QCL information of another reference signal port that may exist. It is clear that for a frequency domain resource corresponding to another type in the first QCL information of the first reference signal port, the frequency domain resource corresponding to the another type in the first QCL information may also be configured by using configuration similar to that of the third indication information. Details are not described herein again.

The scenario shown in FIG. 4 is still used as an example for description herein.

Specifically, in this embodiment shown in FIG. 5a, for a frequency domain resource range of a same reference signal port, all QCL types may use same QCL configuration information. That is, type A QCL information of the DMRS port a is all used on the frequency domain resource (for example, an RBG 1 a BWP 1, or another frequency domain resource) indicated by the second indication information, type A QCL information of the DMRS port b is all used on the frequency domain resource (for example, an RBG 2, a BWP 2, or another frequency domain resource) indicated by the second indication information, and type A QCL information of the DMRS port c is all used on the frequency domain resource (for example, an RBG 3, a BWP 3, or another frequency domain resource) indicated by the second indication information. Every two of the RBG 1, the RBG 2, and the RBG 3 may be a same frequency domain resource, or frequency domain resources that do not overlap with each other, or frequency domain resources that are partially the same. This is not limited herein. Similarly, the BWP 1, the BWP 2, the BWP 3, or another frequency domain resource may also have a plurality of implementations. Details are not described herein again.

Based on the technical solution shown in FIG. 5b, the transmit end may further send, to the receive end, the third indication information indicating the frequency domain resource corresponding to the first-type QCL information in the first QCL information, that is, the transmit end may configure the corresponding frequency domain resource for the first-type QCL information in the first QCL information of the first reference signal port, so that the receive end may subsequently perform channel estimation or channel measurement on the first reference signal port on the specified frequency domain resource based on the third indication information by using the first-type QCL information in the first QCL information. Therefore, a corresponding frequency domain resource is configured for QCL information of a type in QCL information corresponding to each reference signal port, and frequency domain resources corresponding to QCL information of a type in QCL information of different reference signal ports may be the same or may be different. This is not limited herein.

FIG. 6a is another schematic diagram of a communication method according to an embodiment of this application. The method includes the following steps.

S401: A transmit end determines first indication information and fourth indication information.

In this embodiment, the transmit end determines the first indication information and the fourth indication information in step S401. The first indication information is used to configure a first reference signal port, and the configuration indicates first QCL information of the first reference signal port. The fourth indication information indicates a frequency domain resource corresponding to QCL information of a first reference signal port group, where the first reference signal port group includes the first reference signal port.

In a possible implementation, similar to the embodiment in FIG. 3, the first indication information in step S401 is further used to configure a second reference signal port, and the configuration further indicates second QCL information of the second reference signal port. That is, the first indication information may be further used to perform QCL configuration on other reference signal ports than the first reference signal port, for example, perform QCL configuration on the second reference signal port.

In a possible implementation, when the first QCL information is the same as the second QCL information, both the first reference signal port and the second reference signal port correspond to the first reference signal port group, that is, the fourth indication information indicates frequency domain resources corresponding to QCL information of at least the first reference signal port and the second reference signal that are included in the first reference signal port group.

In a possible implementation, when the first QCL information is different from the second QCL information, the first reference signal port and the second reference signal port respectively correspond to different reference signal port groups. For example, the second reference signal corresponds to a second reference signal port group, and the first reference signal port group is different from the second reference signal port group, that is, in addition to indicating a frequency domain resource corresponding to QCL information of the first reference signal port group, the fourth indication information may further indicate a frequency domain resource corresponding to QCL information of the second reference signal port group.

S402: The transmit end sends the first indication information and the fourth indication information to a receive end.

In this embodiment, the transmit end sends the first indication information and the fourth indication information that are determined in step S401 to the receive end in step S402. Correspondingly, the receive end receives, in step S402, the first indication information and the fourth indication information that are sent by the transmit end.

S403: The receive end determines first QCL information based on the first indication information, and determines a frequency domain resource corresponding to QCL information of a first reference signal port group based on the fourth indication information.

In this embodiment, the receive end determines the first QCL information based on the first indication information received in step S402, and determines the frequency domain resource corresponding to the QCL information of the first reference signal port group based on the fourth indication information received in step S402.

It should be noted that a processing process of the first indication information in step S401 to step S403 is similar to the implementation process shown in FIG. 3. Details are not described herein again.

Optionally, the receive end may obtain the fourth indication information in another implementation other than FIG. 6a, for example, preconfigure the fourth indication information on the receive end.

Optionally, in step S402, the fourth indication information and the first indication information are carried in a same message (for example, an RRC message/a MAC CE/a DCI message), or the fourth indication information and the first indication information are carried in different messages.

For example, at least one indication information of the first indication information and the fourth indication information may alternatively be implemented in a multi-level indication manner. For an implementation process, refer to the implementation in which the first indication information and the second indication information are indicated in the multi-level indication manner. Details are not described herein again.

In addition, in addition to indicating the frequency domain resource corresponding to the QCL information of the first reference signal port group, the fourth indication information may further indicate a frequency domain resource corresponding to QCL information of another reference signal port group, for example, may indicate the frequency domain resource corresponding to the QCL information of the second reference signal port group, or may indicate a frequency domain resource corresponding to QCL information of a third reference signal port group and a frequency domain resource corresponding to QCL information of another reference signal port group that may exist.

The scenario shown in FIG. 4 is still used as an example for description herein.

Specifically, in this embodiment shown in FIG. 6a, for a frequency domain resource range of a same reference signal port group, all QCL types may use same QCL configuration information. That is, QCL information of different types of the DMRS port a in the DMRS port group A is used on the frequency domain resource (for example, an RBG 1, a BWP 1, or another frequency domain resource) indicated by the fourth indication information, and QCL information of different types of the DMRS port b and the DMRS port c in the DMRS port group B is used on the frequency domain resource (for example, an RBG 2, a BWP 2, or another frequency domain resource) indicated by the fourth indication information. The RBG 1 and the RBG 2 may be a same frequency domain resource, or frequency domain resources that do not overlap with each other, or frequency domain resources that are partially the same. This is not limited herein. Similarly, the BWP 1, the BWP 2, or another frequency domain resource may also have a plurality of implementations. Details are not described herein again.

Based on the technical solution shown in FIG. 6a, the transmit end may further send, to the receive end, the fourth indication information indicating the frequency domain resource corresponding to the QCL information of the first reference signal port group, that is, the transmit end may configure the frequency domain resource for the QCL information of the first reference signal port group, so that the receive end may subsequently perform channel estimation or channel measurement on the first reference signal port group on the specified frequency domain resource based on the fourth indication information by using the QCL information of the first reference signal port group. Therefore, a corresponding frequency domain resource is configured for QCL information of each reference signal port group, and frequency domain resources corresponding to QCL information of different reference signal port groups may be the same or may be different. This is not limited herein.

FIG. 6b is another schematic diagram of a communication method according to an embodiment of this application. The method includes the following steps.

S501: A transmit end determines first indication information and fifth indication information.

In this embodiment, the transmit end determines the first indication information and the fifth indication information in step S501. The first indication information is used to configure a first reference signal port, and the configuration indicates first QCL information of the first reference signal port. The fifth indication information indicates a frequency domain resource corresponding to first-type QCL information in QCL information of a first reference signal port group.

In a possible implementation, similar to the embodiment in FIG. 3, the first indication information in step S501 is further used to configure a second reference signal port, and the configuration further indicates second QCL information of the second reference signal port. That is, the first indication information may be further used to perform QCL configuration on other reference signal ports than the first reference signal port, for example, perform QCL configuration on the second reference signal port.

In a possible implementation, when first-type QCL information in the first QCL information is the same as first-type QCL information in the second QCL information, both the first reference signal port and the second reference signal port correspond to the first reference signal port group, that is, the fifth indication information indicates frequency domain resources corresponding to QCL information of at least the first reference signal port and the second reference signal that are included in the first reference signal port group.

In a possible implementation, when the first-type QCL information in the first QCL information is different from the first-type QCL information in the second QCL information, the first reference signal port and the second reference signal port respectively correspond to different reference signal port groups. For example, the second reference signal corresponds to a second reference signal port group, and the first reference signal port group is different from the second reference signal port group, that is, in addition to indicating a frequency domain resource corresponding to QCL information of the first reference signal port group, the fifth indication information may further indicate a frequency domain resource corresponding to QCL information of the second reference signal port group.

S502: The transmit end sends the first indication information and the fifth indication information to a receive end.

In this embodiment, the transmit end sends the first indication information and the fifth indication information that are determined in step S501 to the receive end in step S502. Correspondingly, the receive end receives, in step S502, the first indication information and the fifth indication information that are sent by the transmit end.

S503: The receive end determines first QCL information based on the first indication information, and determines a frequency domain resource corresponding to first-type QCL information in QCL information of a first reference signal port group based on the fifth indication information.

In this embodiment, the receive end determines the first QCL information based on the first indication information received in step S502, and determines the frequency domain resource corresponding to the first-type QCL information in the QCL information of the first reference signal port group based on the fifth indication information received in step S502.

It should be noted that a processing process of the first indication information in step S501 to step S503 is similar to the implementation process shown in FIG. 3. Details are not described herein again.

Optionally, the receive end may obtain the fifth indication information in another implementation other than FIG. 6a, for example, preconfigure the fifth indication information on the receive end.

Optionally, in step S502, the fifth indication information and the first indication information are carried in a same message (for example, an RRC message/a MAC CE/a DCI message), or the fifth indication information and the first indication information are carried in different messages.

For example, at least one indication information of the first indication information and the fourth indication information may alternatively be implemented in a multi-level indication manner. For an implementation process, refer to the implementation in which the first indication information and the second indication information are indicated in the multi-level indication manner. Details are not described herein again.

In addition, in addition to indicating the frequency domain resource corresponding to the first-type QCL information in the QCL information of the first reference signal port group, the fifth indication information may further indicate a frequency domain resource corresponding to first-type QCL information in QCL information of another reference signal port group, for example, may indicate the frequency domain resource corresponding to the first-type QCL information in the QCL information of the second reference signal port group, or may indicate a frequency domain resource corresponding to first-type QCL information in QCL information of a third reference signal port group and a frequency domain resource corresponding to QCL information of another reference signal port group that may exist.

The scenario shown in FIG. 4 is still used as an example for description herein.

Specifically, in this embodiment shown in FIG. 6b, for a frequency domain resource range of a same reference signal port group, first-type QCL information may use same QCL configuration information. That is, first-type QCL information of the DMRS port a in the DMRS port group A is used on the frequency domain resource (for example, an RBG 1, a BWP 1, or another frequency domain resource) indicated by the fifth indication information, and first-type QCL information of the DMRS port b and the DMRS port c in the DMRS port group B is used on the frequency domain resource (for example, an RBG 2, a BWP 2, or another frequency domain resource) indicated by the fifth indication information. The RBG 1 and the RBG 2 may be a same frequency domain resource, or frequency domain resources that do not overlap with each other, or frequency domain resources that are partially the same. This is not limited herein. Similarly, the BWP 1, the BWP 2, or another frequency domain resource may also have a plurality of implementations. Details are not described herein again.

Based on the technical solution shown in FIG. 6b, the transmit end may further send, to the receive end, the fifth indication information indicating the frequency domain resource corresponding to the first-type QCL information in the QCL information of the first reference signal port group, that is, the transmit end may configure the corresponding frequency domain resource based on QCL information of a type of the first reference signal port group, so that the receive end may subsequently perform channel estimation or channel measurement on the first reference signal port group on the specified frequency domain resource based on the fifth indication information by using the first-type QCL information in the QCL information of the first reference signal port group. Therefore, a corresponding frequency domain resource is configured for QCL information of a type in QCL information of each reference signal port group, and frequency domain resources corresponding to QCL information of a type in QCL information of different reference signal port groups may be the same or may be different. This is not limited herein.

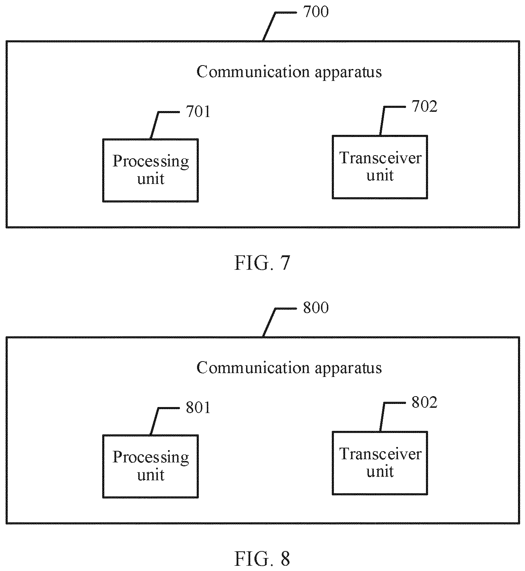

Refer to FIG. 7. An embodiment of this application provides a communication apparatus. The communication apparatus 700 can implement the function of the transmit end in the foregoing method embodiments, and therefore can also implement beneficial effects of the foregoing method embodiments.

The communication apparatus 700 includes a processing unit 701 and a transceiver unit 702.

The processing unit 701 is configured to determine first indication information, where the first indication information is used to configure a first reference signal port, and the configuration indicates first quasi co-location QCL information of the first reference signal port.

The transceiver unit 702 is configured to send the first indication information.

In a possible implementation, the first indication information is further used to configure a second reference signal port, and the configuration further indicates second QCL information of the second reference signal port.

In a possible implementation, the first QCL information is different from the second QCL information.

In a possible implementation, the first QCL information includes first-type QCL information.

In a possible implementation, the second QCL information includes first-type QCL information.

In a possible implementation, the first-type QCL information in the first QCL information is different from the first-type QCL information in the second QCL information.

In a possible implementation, the first QCL information is determined by using QCL information of at least one first signal, and the first signal includes at least one of the following:
a CSI-RS, an SSB, and a DMRS.

In a possible implementation, the first-type QCL information in the first QCL information is determined by using QCL information of at least one second signal, and the second signal includes at least one of the following:
the CSI-RS, the SSB, and the DMRS.

In a possible implementation, the processing unit 701 is further configured to determine second indication information, where the second indication information indicates a frequency domain resource corresponding to the first QCL information.

The transceiver unit 702 is further configured to send the second indication information.

In a possible implementation, the processing unit 701 is further configured to determine third indication information, where the third indication information indicates a frequency domain resource corresponding to the first-type QCL information in the first QCL information.

The transceiver unit 702 is further configured to send the third indication information.

In a possible implementation, the first reference signal port is included in a first reference signal port group, the first reference signal port group includes one or more reference signal ports, and QCL information of the one or more reference signal ports is associated with the first reference signal port group.

In a possible implementation, the first reference signal port is included in the first reference signal port group, the first reference signal port group includes the one or more reference signal ports, and QCL information of a same type of the one or more reference signal ports is associated with the first reference signal port group.

In a possible implementation, the processing unit 701 is further configured to determine fourth indication information, where the fourth indication information indicates a frequency domain resource corresponding to the QCL information of the first reference signal port group.

The transceiver unit 702 is further configured to send the fourth indication information.

In a possible implementation, the processing unit 701 is further configured to determine fifth indication information, where the fifth indication information indicates a frequency domain resource corresponding to first-type QCL information in the QCL information of the first reference signal port group.

The transceiver unit 702 is further configured to send the fourth indication information.

In a possible implementation, the first reference signal port is a DMRS port or a CSI-RS port.

It should be noted that for specific content such as an information execution process of the units of the communication apparatus 700, refer to descriptions in the foregoing method embodiments of this application. Details are not described herein again.

Refer to FIG. 8. An embodiment of this application provides a communication apparatus. The communication apparatus 800 can implement the function of the receive end in the foregoing method embodiments, and therefore can also implement beneficial effects of the foregoing method embodiments.

The communication apparatus 800 includes a processing unit 801 and a transceiver unit 802.

The transceiver unit 802 is configured to receive first indication information, where the first indication information is used to configure a first reference signal port, and the configuration indicates first quasi co-location QCL information of the first reference signal port.

The processing unit 801 is configured to determine the first QCL information based on the first indication information.

In a possible implementation, the first indication information is further used to configure a second reference signal port, and the configuration further indicates second QCL information of the second reference signal port.

The processing unit 801 is further configured to determine the second QCL information based on the first indication information.

In a possible implementation, the first QCL information is different from the second QCL information.

In a possible implementation, the first QCL information includes first-type QCL information.

In a possible implementation, the second QCL information includes first-type QCL information.

In a possible implementation, the first-type QCL information in the first QCL information is different from the first-type QCL information in the second QCL information.

In a possible implementation, the first QCL information is determined by using QCL information of at least one first signal, and the first signal includes at least one of the following:
a CSI-RS, an SSB, and a DMRS.

In a possible implementation, the first-type QCL information in the first QCL information is determined by using QCL information of at least one second signal, and the second signal includes at least one of the following:
the CSI-RS, the SSB, and the DMRS.

In a possible implementation, the transceiver unit 802 is further configured to receive second indication information, where the second indication information indicates a frequency domain resource corresponding to the first QCL information.

The processing unit 801 is further configured to determine a frequency domain resource corresponding to the first reference signal port based on the second indication information.

In a possible implementation, the transceiver unit 802 is further configured to receive third indication information, where the third indication information indicates a frequency domain resource corresponding to the first-type QCL information in the first QCL information.

The processing unit 801 is further configured to determine the frequency domain resource corresponding to the first-type QCL information in the first QCL information based on the third indication information.

In a possible implementation, the first reference signal port is included in a first reference signal port group, the first reference signal port group includes one or more reference signal ports, and QCL information of the one or more reference signal ports is associated with the first reference signal port group.

In a possible implementation, the first reference signal port is included in the first reference signal port group, the first reference signal port group includes the one or more reference signal ports, and QCL information of a same type of the one or more reference signal ports is associated with the first reference signal port group.

In a possible implementation, the transceiver unit 802 is further configured to receive fourth indication information, where the fourth indication information indicates a frequency domain resource corresponding to the QCL information of the first reference signal port group.

The processing unit 801 is further configured to determine the frequency domain resource corresponding to the first reference signal port group based on the fourth indication information.

In a possible implementation, the transceiver unit 802 is further configured to receive fifth indication information, where the fifth indication information indicates a frequency domain resource corresponding to first-type QCL information in the QCL information of the first reference signal port group.

The processing unit 801 is further configured to determine the frequency domain resource corresponding to the first-type QCL information in the QCL information of the first reference signal port group based on the fifth indication information.

In a possible implementation, the first reference signal port is a DMRS port or a CSI-RS port.

It should be noted that for specific content such as an information execution process of the units of the communication apparatus 800, refer to descriptions in the foregoing method embodiments of this application. Details are not described herein again.

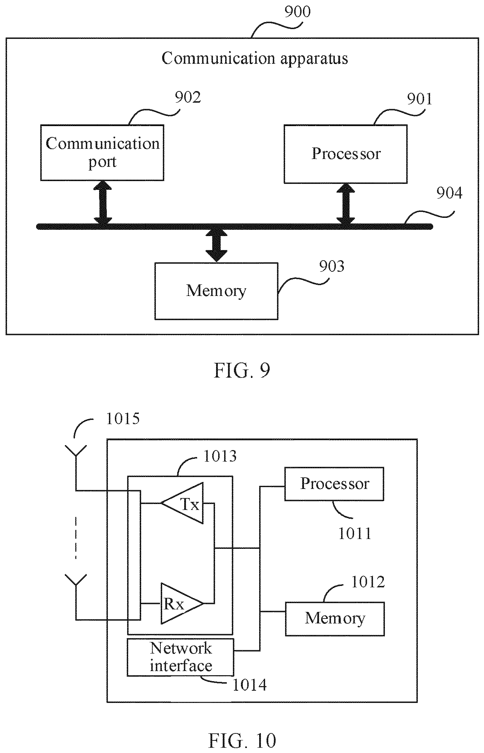

FIG. 9 is a schematic diagram of a possible logical structure of a communication apparatus 900 involved in the foregoing embodiments according to an embodiment of this application. The communication apparatus may be specifically the terminal device in the foregoing embodiments. The communication apparatus 900 may include, but not limited to, at least one processor 901 and a communication port 902. Further, optionally, the apparatus may further include at least one of a memory 903 and a bus 904. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for convenient and brief description, for a detailed working process of the foregoing system, apparatus, and unit, refer to a corresponding process in the foregoing method embodiments, and details are not described herein again.

It should be noted that the communication apparatus shown in FIG. 9 may be specifically configured to implement other steps implemented by the terminal device in the foregoing corresponding method embodiments, and implement technical effects corresponding to the terminal device. For specific implementations of the communication apparatus shown in FIG. 9, refer to the descriptions in the foregoing method embodiments. Details are not described herein again.

FIG. 10 is a schematic diagram of a structure of a communication apparatus in the foregoing embodiments according to an embodiment of this application. The communication apparatus may be specifically the network device in the foregoing embodiments. For a structure of the communication apparatus, refer to the structure shown in FIG. 10.

The communication apparatus includes at least one processor 1011 and at least one network interface 1014. Further, optionally, the communication apparatus further includes at least one memory 1012, at least one transceiver 1013, and one or more antennas 1015. The processor 1011, the memory 1012, and the transceiver 1013 are connected to the network interface 1014, for example, through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface. The network interface may include a network interface between the communication apparatus and another communication apparatus (for example, another network device or core network device), for example, an X2 or Xn interface.

The processor 1011 is mainly configured to process a communication protocol and communication data, control the entire communication apparatus, execute a software program, and process data of the software program, for example, configured to support the communication apparatus in performing the actions in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1011 in FIG. 10. A person skilled in the art may understand that the baseband processor and the central processing unit each may be an independent processor, and are interconnected through a technology such as a bus. A person skilled in the art may understand that the terminal device may include a plurality of baseband processors to adapt to different network standards, and the terminal device may include a plurality of central processing units, to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. The function of processing the communication protocol and the communication data may be built in the processor, or may be stored in the memory in a form of a software program, and the processor executes the software program to implement a baseband processing function.

The memory is mainly configured to store the software program and data. The memory 1012 may be independent, and connected to the processor 1011. Optionally, the memory 1012 and the processor 1011 may be integrated together, for example, integrated in a chip. The memory 1012 can store program code for executing technical solutions of embodiments of this application, and execution of the program code is controlled by the processor 1011. Various types of computer program code executed may also be considered as a driver of the processor 1011.

FIG. 10 shows only one memory and one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or may be an independent storage element. This is not limited in this embodiment of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive a radio frequency signal. The receiver Rx of the transceiver 1013 is configured to receive the radio frequency signal from the antenna, convert the radio frequency signal into a digital baseband signal or a digital intermediate frequency signal, and provide the digital baseband signal or the digital intermediate frequency signal to the processor 1011, so that the processor 1011 further processes, for example, demodulates or decodes, the digital baseband signal or the digital intermediate frequency signal. In addition, the transmitter Tx of the transceiver 1013 is further configured to receive a modulated digital baseband signal or digital intermediate frequency signal from the processor 1011, converts the modulated digital baseband signal or digital intermediate frequency signal into a radio frequency signal, and sends the radio frequency signal through the one or more antennas 1015. Specifically, the receiver Rx may selectively perform one-stage or multi-stage down-mixing and analog-to-digital conversion on the radio frequency signal to obtain a digital baseband signal or a digital intermediate frequency signal. An order in which the down-mixing and the analog-to-digital conversion are performed is adjustable. The transmitter Tx may selectively perform one-stage or multi-stage up-mixing and digital-to-analog conversion on a modulated digital baseband signal or digital intermediate frequency signal to obtain a radio frequency signal. An order in which the up-mixing and the digital-to-analog conversion are performed is adjustable. The digital baseband signal and the digital intermediate frequency signal may be collectively referred to as a digital signal.

The transceiver may also be referred to as a transceiver unit, a transmitter-receiver, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter, a sender, a transmitter circuit, or the like.

It should be noted that the communication apparatus shown in FIG. 10 may be specifically configured to implement steps implemented by the network device in the foregoing method embodiments, and implement technical effects corresponding to the network device. For specific implementations of the communication apparatus shown in FIG. 10, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method according to the possible implementations of the communication apparatus (which is implemented by using the terminal device) in the foregoing embodiments.

An embodiment of this application further provides a computer-readable storage medium storing one or more computer-executable instructions. When the computer-executable instructions are executed by a processor, the processor performs the method according to the possible implementations of the communication apparatus (which is implemented by using the network device) in the foregoing embodiments.

An embodiment of this application further provides a computer program product (or referred to as a computer program) storing one or more computers. When the computer program product is executed by a processor, the processor performs the method according to the possible implementations of the communication apparatus (which is implemented by using the terminal device).

An embodiment of this application further provides a computer program product storing one or more computers. When the computer program product is executed by a processor, the processor performs the method according to the possible implementations of the communication apparatus (which is implemented by using the network device).

An embodiment of this application further provides a chip system. The chip system includes at least one processor, configured to support a terminal device in implementing the functions in the possible implementations of the foregoing communication apparatus (which is implemented by using the terminal device). Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete component.

An embodiment of this application further provides a chip system. The chip system includes at least one processor, configured to support a network device in implementing the functions in the possible implementations of the communication apparatus (which is implemented by using the network device). Optionally, the chip system further includes an interface circuit, and the interface circuit provides program instructions and/or data for the at least one processor. In a possible design, the chip system may further include a memory. The memory is configured to store program instructions and data that are necessary for the network device. The chip system may include a chip, or may include a chip and another discrete component. The network device may be specifically the network device in the foregoing method embodiments.

An embodiment of this application further provides a communication system. The network system architecture includes the communication apparatus (which includes the terminal device and the network device) in any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of this embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit. When the integrated unit is implemented in the form of the software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a computer software product. The computer software product is stored in a storage medium and includes several instructions for instructing a computer device (which may be a personal computer, a server, or a network device) to perform all or some of the steps of the methods in embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application shall be subject to the protection scope of the claims.

## Claims

1. A communication method, comprising:
determining first indication information, wherein the first indication information is used to configure a first reference signal port, and the configuration indicates first quasi co-location QCL information of the first reference signal port; and
sending the first indication information.

2. The method according to claim 1, wherein the first indication information is further used to configure a second reference signal port, and the configuration further indicates second QCL information of the second reference signal port.

3. The method according to claim 2, wherein
the first QCL information is different from the second QCL information.

4. The method according to any one of claims 1 to 3, wherein
the first QCL information comprises first-type QCL information.

5. The method according to claim 4, wherein
the second QCL information comprises first-type QCL information.

6. The method according to claim 5, wherein
the first-type QCL information in the first QCL information is different from the first-type QCL information in the second QCL information.

7. The method according to any one of claims 1 to 6, wherein the first QCL information is determined by using QCL information of at least one first signal, and the first signal comprises at least one of the following:
a channel state information reference signal CSI-RS, a synchronization signal block SSB, and a demodulation reference signal DMRS.

8. The method according to any one of claims 4 to 7, wherein the first-type QCL information in the first QCL information is determined by using QCL information of at least one second signal, and the second signal comprises at least one of the following:
the CSI-RS, the SSB, and the DMRS.

9. The method according to any one of claims 1 to 8, wherein the method further comprises:
determining second indication information, wherein the second indication information indicates a frequency domain resource corresponding to the first QCL information; and
sending the second indication information.

10. The method according to any one of claims 4 to 9, wherein the method further comprises:
determine third indication information, wherein the third indication information indicates a frequency domain resource corresponding to the first-type QCL information in the first QCL information; and
sending the third indication information.

11. The method according to any one of claims 1 to 10, wherein
the first reference signal port is comprised in a first reference signal port group, the first reference signal port group comprises one or more reference signal ports, and QCL information of the one or more reference signal ports is associated with the first reference signal port group.

12. The method according to any one of claims 1 to 11, wherein
the first reference signal port is comprised in the first reference signal port group, the first reference signal port group comprises the one or more reference signal ports, and QCL information of a same type of the one or more reference signal ports is associated with the first reference signal port group.

13. The method according to claim 11 or 12, wherein the method further comprises:
determining fourth indication information, wherein the fourth indication information indicates a frequency domain resource corresponding to the QCL information of the first reference signal port group; and
sending the fourth indication information.

14. The method according to any one of claims 11 to 13, wherein the method further comprises:
determining fifth indication information, wherein the fifth indication information indicates a frequency domain resource corresponding to first-type QCL information in the QCL information of the first reference signal port group; and
sending the fourth indication information.

15. The method according to any one of claims 1 to 14, wherein the first reference signal port is a DMRS port or a CSI-RS port.

16. A communication method, comprising:
receiving first indication information, wherein the first indication information is used to configure a first reference signal port, and the configuration indicates first quasi co-location QCL information of the first reference signal port; and
determining the first QCL information based on the first indication information.

17. The method according to claim 16, wherein the first indication information is further used to configure a second reference signal port, and the configuration further indicates second QCL information of the second reference signal port; and the method further comprises:
determining the second QCL information based on the first indication information.

18. The method according to claim 17, wherein
the first QCL information is different from the second QCL information.

19. The method according to any one of claims 16 to 18, wherein
the first QCL information comprises first-type QCL information.

20. The method according to claim 19, wherein
the second QCL information comprises first-type QCL information.

21. The method according to claim 20, wherein
the first-type QCL information in the first QCL information is different from the first-type QCL information in the second QCL information.

22. The method according to any one of claims 16 to 21, wherein the first QCL information is determined by using QCL information of at least one first signal, and the first signal comprises at least one of the following:
a CSI-RS, an SSB, and a DMRS.

23. The method according to any one of claims 19 to 22, wherein the first-type QCL information in the first QCL information is determined by using QCL information of at least one second signal, and the second signal comprises at least one of the following:
the CSI-RS, the SSB, and the DMRS.

24. The method according to any one of claims 16 to 23, wherein the method further comprises:
receiving second indication information, wherein the second indication information indicates a frequency domain resource corresponding to the first QCL information; and
determining a frequency domain resource corresponding to the first reference signal port based on the second indication information.

25. The method according to any one of claims 19 to 24, wherein the method further comprises:
receiving third indication information, wherein the third indication information indicates a frequency domain resource corresponding to the first-type QCL information in the first QCL information; and
determining the frequency domain resource corresponding to the first-type QCL information in the first QCL information based on the third indication information.

26. The method according to any one of claims 16 to 25, wherein
the first reference signal port is comprised in a first reference signal port group, the first reference signal port group comprises one or more reference signal ports, and QCL information of the one or more reference signal ports is associated with the first reference signal port group.

27. The method according to any one of claims 16 to 26, wherein
the first reference signal port is comprised in the first reference signal port group, the first reference signal port group comprises the one or more reference signal ports, and QCL information of a same type of the one or more reference signal ports is associated with the first reference signal port group.

28. The method according to claim 26 or 27, wherein the method further comprises:
receiving fourth indication information, wherein the fourth indication information indicates a frequency domain resource corresponding to the QCL information of the first reference signal port group; and
determining a frequency domain resource corresponding to the first reference signal port group based on the fourth indication information.

29. The method according to any one of claims 26 to 28, wherein the method further comprises:
receiving fifth indication information, wherein the fifth indication information indicates a frequency domain resource corresponding to first-type QCL information in the QCL information of the first reference signal port group; and
determining the frequency domain resource corresponding to the first-type QCL information in the QCL information of the first reference signal port group based on the fifth indication information.

30. The method according to any one of claims 16 to 29, wherein the first reference signal port is a DMRS port or a CSI-RS port.

31. A communication apparatus, comprising:
a processing unit, configured to determine first indication information, wherein the first indication information is used to configure a first reference signal port, and the configuration indicates first quasi co-location QCL information of the first reference signal port; and
a transceiver unit, configured to send the first indication information.

32. A communication apparatus, comprising:
a transceiver unit, configured to receive first indication information, wherein the first indication information is used to configure a first reference signal port, and the configuration indicates first quasi co-location QCL information of the first reference signal port; and
a processing unit, configured to determine the first QCL information based on the first indication information.

33. The apparatus according to claim 31 or 32, wherein the first indication information is further used to configure a second reference signal port, and the configuration further indicates second QCL information of the second reference signal port.

34. The apparatus according to claim 33, wherein
the first QCL information is different from the second QCL information.

35. The apparatus according to any one of claims 31 to 34, wherein
the first QCL information comprises first-type QCL information.

36. The apparatus according to claim 35, wherein
the second QCL information comprises first-type QCL information.

37. The apparatus according to claim 36, wherein
the first-type QCL information in the first QCL information is different from the first-type QCL information in the second QCL information.

38. The apparatus according to any one of claims 31 to 37, wherein the first QCL information is determined by using QCL information of at least one first signal, and the first signal comprises at least one of the following:
a channel state information reference signal CSI-RS, a synchronization signal block SSB, and a demodulation reference signal DMRS.

39. The apparatus according to any one of claims 35 to 38, wherein the first-type QCL information in the first QCL information is determined by using QCL information of at least one second signal, and the second signal comprises at least one of the following:
the CSI-RS, the SSB, and the DMRS.

40. The apparatus according to any one of claims 31 to 39, wherein
the first reference signal port is comprised in a first reference signal port group, the first reference signal port group comprises one or more reference signal ports, and QCL information of the one or more reference signal ports is associated with the first reference signal port group.

41. The apparatus according to any one of claims 31 to 40, wherein
the first reference signal port is comprised in the first reference signal port group, the first reference signal port group comprises the one or more reference signal ports, and QCL information of a same type of the one or more reference signal ports is associated with the first reference signal port group.

42. The apparatus according to any one of claims 31 to 41, wherein the first reference signal port is a DMRS port or a CSI-RS port.

43. A communication apparatus, comprising at least one processor coupled to a memory, wherein
the memory is configured to store a program or instructions; and
the at least one processor is configured to execute the program or the instructions, to enable the apparatus to implement the method according to claims 1 to 15.

44. A communication apparatus, comprising at least one processor coupled to a memory, wherein
the memory is configured to store a program or instructions; and
the at least one processor is configured to execute the program or the instructions, to enable the apparatus to implement the method according to claims 16 to 30.

45. A communication system, wherein
the communication system comprises the communication apparatus according to any one of claims 31 and 33 to 42, and the communication apparatus according to any one of claims 32 to 42; or
the communication system comprises the communication apparatus according to claim 43 and the communication apparatus according to claim 44.

46. A computer-readable storage medium, wherein the medium stores instructions, and when the instructions are executed by a computer, the method according to any one of claims 1 to 30 is implemented.

47. A computer program product, comprising instructions, wherein when the instructions run on a computer, the computer is enabled to perform the method according to any one of claims 1 to 30.
